# EUROPEAN PATENT APPLICATION

(11) **EP 3 584 753 A1**
(43) Date of publication of application: **25.12.2019**
(21) Application number: 19181193.4
(22) Date of filing: 19.06.2019
(51) Int. Cl.: G06Q 20/04, G06Q 20/32

(54) **TRANSACTION MANAGEMENT APPARATUS, TRANSACTION MANAGEMENT SYSTEM, AND INFORMATION PROCESSING PROGRAM**

(30) Priority: 20.06.2018 JP 2018117414
(71) Applicant: Toshiba Tec Kabushiki Kaisha, 141-8562 Tokyo (JP)
(72) Inventor: SHIMIZU, Kenji, Shinagawa-ku,, Tokyo 141-8562 (JP)
(74) Representative: Bandpay & Greuter

(57) **Abstract**

A transaction management apparatus according to an embodiment includes a managing section, an acquiring section, and a control section. The managing section manages transaction data representing content of a transaction in association with an identification code for identifying an individual. The acquiring section acquires an identification code different from the identification code associated with the transaction data. The control section controls the managing section to manage the transaction data in association with the identification code acquired by the acquiring section.

## Description

### FIELD

The present invention relates to information processing technologies in general, and embodiments described herein relate more particularly to a transaction management apparatus, a transaction management system, and an information processing program.

### BACKGROUND

Content of a transaction in a store or the like has been managed in association with an individual set as a target of the transaction in order to, for example, provide an electronic receipt service.

Specifically, an identification code for identifying an individual read from an ID card or the like carried by a person who performs settlement of a transaction in a store or the like is associated with transaction data representing content of the transaction.

Therefore, if an agent of a transactor is a settler, an identification code for identifying the agent is associated with transaction data. Association between the original transactor and a transaction cannot be managed.

Under such circumstances, for example, if a transactor and a settler are different, it is desired that a transaction can be managed in association with the transactor.

Related art is described in, for example, JP-A-2017-167242.

To this end, there is provided a transaction management apparatus comprising:
a managing section configured to manage transaction data representing content of a transaction in association with an identification code for identifying an individual;
an acquiring section configured to acquire an identification code different from the identification code associated with the transaction data; and
a control section configured to control the managing section to manage the transaction data in association with the identification code acquired by the acquiring section.

Preferably,-the transaction management apparatus comprises:
a managing section configured to manage transaction data representing content of a transaction in association with an identification code for identifying an individual;
an acquiring section configured to acquire an identification code different from the identification code associated with the transaction data;
a determining section configured to determine a transition item serving as a part of a plurality of transaction items represented by the transaction data; and
a control section configured to control the managing section to manage the transition item determined by the determining section in association with the identification code acquired by the acquiring section.

The invention further relates to a transaction management system including a transaction management apparatus and an information terminal apparatus, the transaction management system comprising:
a managing section included in the transaction management apparatus and configured to manage transaction data representing content of a transaction in association with an identification code for identifying an individual;
a determining section included in the information terminal apparatus and configured to determine, according to operation by the individual identified by the identification code associated with the transaction data by the managing section, an identification code different from the identification code to be associated with the transaction data anew;
a notifying section included in the information terminal apparatus and configured to notify the identification code determined by the determining section to the transaction management apparatus;
an acquiring section included in the transaction management apparatus and configured to acquire the identification code notified by the notifying section; and
a control section configured to control the managing section to manage the transaction data in association with the identification code acquired by the acquiring section.

Preferably, the invention concerns a transaction management system including a transaction management apparatus and an information terminal apparatus, the transaction management system comprising:
a managing section included in the transaction management apparatus and configured to manage transaction data representing content of a transaction in association with an identification code for identifying an individual;
a setting section included in the information terminal apparatus and configured to set, according to operation by the individual identified by the identification code associated with the transaction data by the managing section, a transition item serving as a part of a plurality of transaction items represented by the transaction data;
a determining section included in the information terminal apparatus and configured to determine, according to operation by the individual identified by the identification code associated with the transaction data by the managing section, an identification code different from the identification code to be associated anew with the transition item set by the setting section;
a notifying section included in the information terminal apparatus and configured to notify the transition item set by the setting section and the identification code determined by the determining section to the transaction management apparatus;
an acquiring section included in the transaction management apparatus and configured to acquire the transition item and the identification code notified by the notifying section; and
a control section included in the transaction management apparatus and configured to control the managing section to manage the transition item acquired by the acquiring section in association with the identification code acquired by the acquiring section.

The invention also relates to an information processing method comprising:
managing transaction data representing content of a transaction in association with an identification code for identifying an individual;
acquiring an identification code different from the identification code associated with the transaction data; and
performing control to manage the transaction data in association with the acquired identification code.

The invention further concerns an information processing program product comprising program code means for performing the steps of, when the program is run on a computer:
managing transaction data representing content of a transaction in association with an identification code for identifying an individual;
acquiring an identification code different from the identification code associated with the transaction data;
determining a transition item serving as a part of a plurality of transaction items represented by the transaction data; and
performing control to manage the determined transition item in association with the acquired identification code.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a block diagram illustrating a schematic configuration of an electronic receipt system according to an embodiment and a main part circuit configuration of an information terminal apparatus and a receipt server included in the electronic receipt system;
FIG. 2 is a diagram schematically illustrating the structure of a master data group;
FIG. 3 is a diagram schematically illustrating the structure of a transaction data group;
FIG. 4 is a diagram schematically illustrating the structure of a data record included in a header table;
FIG. 5 is a diagram schematically illustrating the structure of a data record included in a details table;
FIG. 6 is a diagram schematically illustrating the structure of a data record included in a member association table;
FIG. 7 is a diagram schematically illustrating the structure of a data record included in a collective transfer table;
FIG. 8 is a diagram schematically illustrating the structure of a data record included in a partial transfer table;
FIG. 9 is a diagram schematically illustrating the structure of a data record included in a memorandum table;
FIG. 10 is a flowchart illustrating a processing procedure of a processor concerning update of an acquaintance list in the information terminal apparatus;
FIG. 11 is a diagram illustrating an example of a display screen in a touch panel in FIG. 1 in a state in which barcode reading is performed;
FIG. 12 is a diagram illustrating an example of a code input screen;
FIG. 13 is a diagram illustrating an example of a name input screen;
FIG. 14 is a diagram schematically illustrating the structure of a data record of the acquaintance list;
FIG. 15 is a flowchart of information processing by the processor included in the information terminal apparatus in FIG. 1;
FIG. 16 is a flowchart of the information processing;
FIG. 17 is a flowchart of the information processing;
FIG. 18 is a diagram illustrating an example of a receipt screen;
FIG. 19 is a diagram illustrating an example of a list screen;
FIG. 20 is a diagram illustrating an example of a confirmation screen;
FIG. 21 is a flowchart of information processing by a processor included in the receipt server in FIG. 1;
FIG. 22 is a diagram illustrating an example of a receipt screen;
FIG. 23 is a diagram illustrating an example of a setting screen;
FIG. 24 is a flowchart of the information processing;
FIG. 25 is a diagram illustrating an example of the receipt screen;
FIG. 26 is a diagram illustrating an example of a list screen to be displayed in the information terminal apparatus used by a transfer source user after performing collective transfer;
FIG. 27 is a diagram illustrating an example of a list screen to be displayed in the information terminal apparatus used by a transfer destination user who receives the collective transfer;
FIG. 28 is a diagram illustrating an example of a receipt screen to be displayed in the information terminal apparatus used by the transfer destination user who receives the collective transfer;
FIG. 29 is a diagram illustrating an example of a list screen to be displayed in the information terminal apparatus used by the transfer source user after performing partial transfer;
FIG. 30 is a diagram illustrating an example of a list screen to be displayed in the information terminal apparatus used by the transfer destination user who receives the partial transfer;
FIG. 31 is a diagram illustrating an example of a receipt screen to be displayed in the information terminal apparatus used by the transfer destination user who receives the partial transfer;
FIG. 32 is a diagram illustrating an example of a receipt screen to be displayed in the information terminal apparatus used by the transfer source user after performing the partial transfer;
FIG. 33 is a diagram illustrating an example of a receipt screen to be displayed in the information terminal apparatus used by the transfer destination user who receives the partial transfer;
FIG. 34 is a diagram illustrating an example of a receipt screen to be displayed in the information terminal apparatus used by the transfer source user after performing the partial transfer;
FIG. 35 is a diagram illustrating an example of an original receipt screen;
FIG. 36 is a diagram illustrating an example of a receipt screen to be displayed in the information terminal apparatus used by the transfer destination user who receives the partial transfer;
FIG. 37 is a diagram illustrating an example of a receipt screen to be displayed in the information terminal apparatus used by the transfer source user after performing the partial transfer;
FIG. 38 is a diagram illustrating an example of a memorandum screen;
FIG. 39 is a flowchart of information processing by the processor included in the information terminal apparatus in FIG. 1; and
FIG. 40 is a flowchart of information processing by the processor included in the receipt server in FIG. 1.

### DETAILED DESCRIPTION

An object of embodiments is to provide a transaction management apparatus, a transaction management system, and an information processing program that can manage a transaction in association with a transactor, for example, if the transactor and a settler are different.

A transaction management apparatus according to an embodiment includes a managing section, an acquiring section, and a control section. The managing section manages transaction data representing content of a transaction in association with an identification code for identifying an individual. The acquiring section acquires an identification code different from the identification code associated with the transaction data. The control section controls the managing section to manage the transaction data in association with the identification code acquired by the acquiring section.

An example of an embodiment is explained below with reference to the drawings. In this embodiment, an example is explained in which a function of a transaction management apparatus is included in a receipt server included in an electronic receipt system.

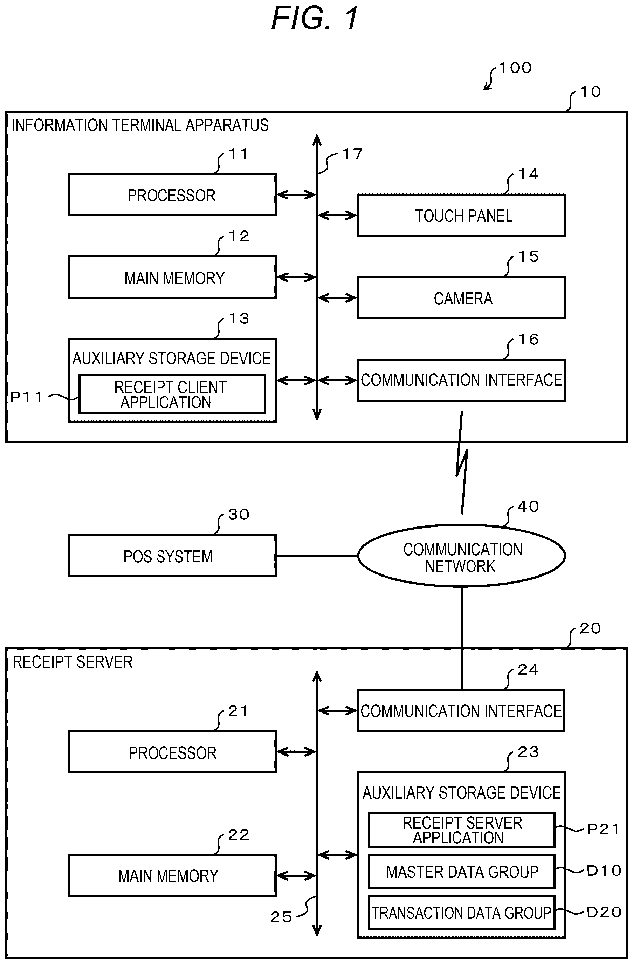

FIG. 1 is a block diagram illustrating a schematic configuration of an electronic receipt system 100 according to this embodiment and a main part circuit configuration of an information terminal apparatus 10 and a receipt server 20 included in the electronic receipt system 100.

The electronic receipt system 100 is configured by enabling the information terminal apparatus 10, the receipt server 20, and a POS (point-of-sale) system 30 to communicate via a communication network 40. As the communication network 40, the Internet, a VPN (virtual private network), a LAN (local area network), a public communication network, a mobile communication network, and the like can be used independently or in combination as appropriate. The electronic receipt system 100 typically includes a plurality of information terminal apparatuses 10 and a plurality of POS systems 30. However, in FIG. 1, only one information terminal apparatus 10 and one POS system 30 are illustrated.

The information terminal apparatus 10 performs, for example, display of a receipt screen for causing a user, who is a member of an electronic receipt service provided by the electronic receipt system 100, to view content of a transaction based on operation by the user. The content of the transaction is, for example, a name of a store where the transaction is performed, date and time when the transaction is performed, a commodity name and a unit price of a commodity set as a target of the transaction, a subtotal amount serving as a price of the transaction, an amount paid by a settler in settlement of the price of the transaction, and an amount of change passed to the settler in the settlement of the price of the transaction. However, the content of the transaction displayed on the receipt screen does not need to include all of these kinds of information. A part of the information may be omitted. Alternatively, any information such as a commodity code of a commodity set as a target of the transaction, an identification code of an apparatus in which registration or settlement of the content of the transaction is performed, a transaction code for identifying the transaction, a store clerk code of a handling store clerk, and a settlement method may be displayed on the receipt screen as the content of the transaction. If a plurality of information terminal apparatuses 10 are included in the electronic receipt system 100, the plurality of information terminal apparatuses 10 may be used by the same user or may be individually used by different users. Alternatively, one information terminal apparatus 10 may be shared by a plurality of users.

The receipt server 20 acquires transaction data representing content of a transaction managed by the POS system 30 from the POS system 30 and accumulates the transaction data. The receipt server 20 generates data of a receipt screen and transmits the data to the information terminal apparatus 10.

The POS system 30 performs processing for registration, accounting, and the like of content of a transaction such as commodity sales in a store. If a customer set as a target of a transaction is a member of the electronic receipt service, the POS system 30 transmits transaction data representing content of the transaction to the receipt server 20.

The information terminal apparatus 10 is typically a portable information processing apparatus such as a smartphone, a cellular phone, or a tablet terminal. The information terminal apparatus 10 may be a stationary information processing apparatus such as a desktop personal computer.

The information terminal apparatus 10 includes a processor 11, a main memory 12, an auxiliary storage device 13, a touch panel 14, a camera 15, a communication interface 16, and a transmission line 17. The processor 11, the main memory 12, the auxiliary storage device 13, the touch panel 14, the camera 15, and the communication interface 16 are connected via the transmission line 17.

In the information terminal apparatus 10, a computer that performs information processing for controlling the information terminal apparatus 10 is configured by connecting the processor 11, the main memory 12, and the auxiliary storage device 13 with the transmission line 17.

The processor 11 is equivalent to a central part of the computer. The processor 11 controls the sections according to information processing programs such as an operating system, middleware, and application programs in order to realize various functions of the information terminal apparatus 10.

The main memory 12 is equivalent to a main storage portion of the computer. The main memory 12 includes a nonvolatile memory region and a volatile memory region. The main memory 12 stores the information processing programs in the nonvolatile memory region. The main memory 12 sometimes stores, in the nonvolatile or volatile memory region, data necessary for the processor 11 in executing processing for controlling the sections. The main memory 12 uses the volatile memory region as a work area where data is rewritten as appropriate by the processor 11.

The auxiliary storage device 13 is equivalent to an auxiliary storage portion of the computer. The auxiliary storage device 13 is, for example, an EEPROM (electric erasable programmable read-only memory). A HDD (hard disc drive), an SSD (solid state drive), or the like may be used as the auxiliary storage device 13. The auxiliary storage device 13 saves data used by the processor 11 in performing various kinds of processing and data generated by the processing in the processor 11. The auxiliary storage device 13 stores information processing programs.

One of the information processing programs stored by the auxiliary storage device 13 is an application program (hereinafter referred to as receipt client application) P11 for operating as a receipt client. However, typically, for example, the receipt client application P11 is downloaded via the Internet and written in the auxiliary storage device 13 according to operation by the user of the information terminal apparatus 10. That is, transfer of the information terminal apparatus 10 to the user of the information terminal apparatus 10 is performed in a state in which the receipt client application P11 is not stored in the auxiliary storage device 13. However, the information terminal apparatus 10 in a state in which the receipt client application P11 is stored in the auxiliary storage device 13 may be transferred to the user of the information terminal apparatus 10.

The touch panel 14 functions as an input device and a display device of the information terminal apparatus 10.

The camera 15 photographs any object and generates image data representing an image including the object. As the camera 15, a well-known imaging device including a CMOS (complementary metal oxide semiconductor) image sensor can be used.

The communication interface 16 is an interface of data communication via the communication network 40. As the communication interface 16, for example, a well-known communication device for performing data communication via a mobile communication network or the Internet can be used.

The transmission line 17 includes an address bus, a data bus, and a control signal line and transmits data and control signals exchanged among the connected sections.

The receipt server 20 includes a processor 21, a main memory 22, an auxiliary storage device 23, a communication interface 24, and a transmission line 25. The processor 21, the main memory 22, the auxiliary storage device 23, and the communication interface 24 are connected by the transmission line 25. The transmission line 25 includes an address bus, a data bus, and a control signal line and transmits data and control signals exchanged among the connected sections.

In the receipt server 20, a computer that performs information processing for controlling the receipt server 20 is configured by connecting the processor 21, the main memory 22, and the auxiliary storage device 23 with the transmission line 25.

The processor 21 is equivalent to a central part of the computer. The processor 21 controls the sections according to information processing programs in order to realize various functions of the receipt server 20.

The main memory 22 is equivalent to a main storage portion of the computer. The main memory 22 includes a nonvolatile memory region and a volatile memory region. The main memory 22 stores the information processing programs in the nonvolatile memory region. The main memory 22 sometimes stores, in the nonvolatile or volatile memory region, data necessary for the processor 21 in executing processing for controlling the sections. The main memory 22 uses the volatile memory region as a work area where data is rewritten as appropriate by the processor 21.

The auxiliary storage device 23 is equivalent to an auxiliary storage portion of the computer. The auxiliary storage device 23 is, for example, an EEPROM, a HDD, or an SSD. The auxiliary storage device 23 saves data used by the processor 21 in performing various kinds of processing and data generated by the processing in the processor 21. The auxiliary storage device 23 sometimes stores information processing programs. One of the information processing programs stored by the auxiliary storage device 23 is an application program (hereinafter referred to as receipt server application) P21 for operating as the receipt server 20. The auxiliary storage device 23 stores a master data group D10 and a transaction data group D20. The master data group D10 and the transaction data group D20 are explained below.

The communication interface 24 is an interface of data communication via the communication network 40. As the communication interface 24, for example, a well-known communication device for performing data communication via the Internet can be used.

The receipt server 20 can use, for example, a general-purpose computer apparatus as basic hardware. In this case, typically, a computer apparatus in a state in which the receipt server application P21 is not stored in the auxiliary storage device 23 and the receipt server application P21 are individually transferred to an operator of the receipt server 20. The transfer of the receipt server application P21 can be realized by recording the receipt server application P21 in a removable recording medium such as a magnetic disk, a magneto-optical disk, an optical disk, or a semiconductor memory or by downloading the receipt server application P21 via a network. In this case, the receipt server application P21 is written in the auxiliary storage device 23 according to operation by an administrator of the receipt server 20, a setting worker of the receipt server 20, or the like.

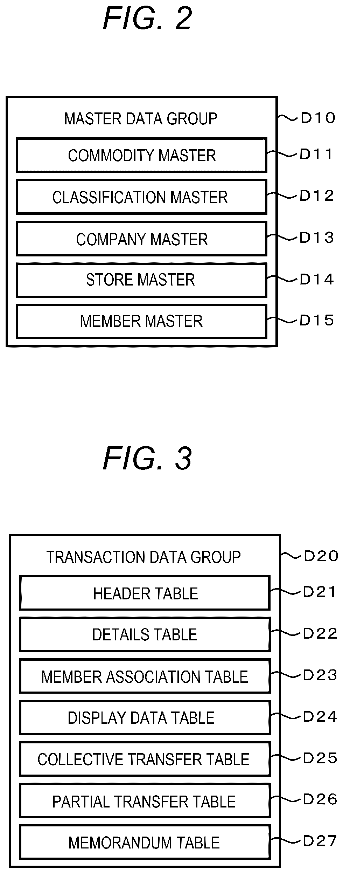

FIG. 2 is a diagram schematically illustrating the structure of the master data group D10.

As illustrated in FIG. 2, the master data group D10 includes a commodity master D11, a classification master D12, a company master D13, a store master D14, and a member master D15.

The commodity master D11 is a set of data records for managing each of commodities set as targets of sales management in the POS system 30. The data record of the commodity master D11 includes, for example, two fields. A first field shows a commodity code for identifying a commodity. A second field shows a classification code for identifying a commodity classification to which a commodity identified by a commodity code shown in the same data record belongs. Commodity classification codes are individually decided for several commodity classifications decided to classify commodities set as targets of sales management in the POS system 30.

The classification master D12 is a set of data records for managing each of commodity classifications. The data record of the classification master D12 includes, for example, two fields. A first field shows classification codes. Any one of the classification codes shown in the field is shown in the second field of the data record of the commodity master D11. A second field in the data record of the classification master D12 shows a classification name decided to allow a human to easily recognize a commodity classification identified by a classification code shown in the data record.

The company master D13 is a set of data records for managing a company that operates the POS system 30. The data record of the company master D13 includes, for example, four fields. A first field shows a company ID for identifying the company. Second, third, and fourth fields respectively show a name, a location, and a telephone number of the company identified by the company ID shown in the same data record.

The store master D14 is a set of data records for managing a store that performs sales management using the POS system 30. The data record of the store master D14 includes, for example, five fields. A first field is a field for identifying a company to which the store belongs. The first field shows a company ID coinciding with one of company IDs included in the company master D13. A second field shows a store ID for identifying the store. The store ID may be a store ID capable of identifying each of a plurality of stores that belong to the same company or may be a store ID capable of identifying each of all stores irrespective of companies to which the stores belong. Third, fourth, and fifth fields respectively show a name, a location, and a telephone number of a store identified by a company ID and a store ID shown in the same data record.

The member master D15 is a set of data records for managing a user who is a member of the electronic receipt service. The data record of the member master D15 includes, for example, six fields. A first field shows a member ID for identifying the user who is the member. A second field shows an identification code of the information terminal apparatus 10 used by a user identified by a member ID shown in the same data record. Third, fourth, fifth, and sixth fields respectively show a mail address, sex, a date of birth, and a zip code claimed by the user identified by the member ID shown in the same data record as attributes of the user.

FIG. 3 is a diagram schematically illustrating the structure of the transaction data group D20.

The transaction data group D20 includes a header table D21, a details table D22, a member association table D23, a display data table D24, a collective transfer table D25, a partial transfer table D26, and a memorandum table D27.

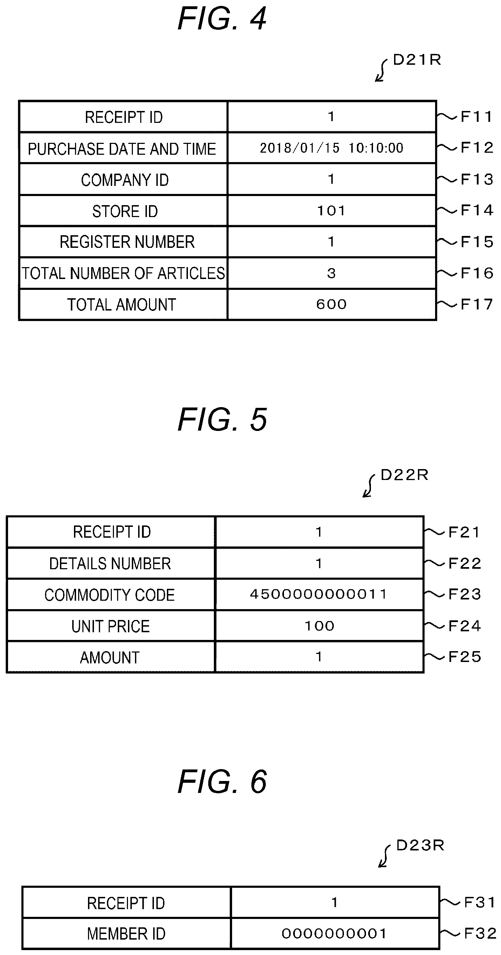

FIG. 4 is a diagram schematically illustrating the structure of a data record D21R included in the header table D21.

The header table D21 is a set of data records D21R illustrated in FIG. 4 for managing data shown in a header portion of a receipt. The data record D21R includes fields F11 to F17. The field F11 shows a receipt ID for identifying a receipt. The field F12 shows purchase date and time serving as date and time when a transaction (hereinafter referred to as target transaction) set as a target of a receipt identified by a receipt ID shown in the field F11 of the same data record D21R. The field F13 shows a company ID of a company to which a store where the target transaction is performed belongs. The field F14 shows a store ID of the store where the target transaction is performed. The field F15 shows a register number serving as a number for identifying an apparatus in which registration of content or settlement of the target transaction is performed. The field F16 shows a total number of articles of a commodity transacted in the target transaction. The field F17 shows a total amount of the commodity transacted in the target transaction. In FIG. 4, values shown in the fields are examples.

FIG. 5 is a diagram schematically illustrating the structure of a data record D22R included in the details table D22.

The details table D22 is a set of data records D22R for managing data shown in a details portion of a receipt. The data record D22R includes fields F21 to F25. The field F21 shows a receipt ID. The field F22 shows a details number for identifying each of receipts divided by partial transfer explained below. The field F23 shows a commodity code of a commodity transacted in the target transaction. The field F24 shows a unit price concerning a commodity identified by a commodity code shown in the field F23 of the same record D22R. The field F25 shows a transaction amount in the target transaction concerning the commodity identified by the commodity code shown in the field F23 of the same data record D22R. In FIG. 5, values shown in the fields are examples.

FIG. 6 is a diagram schematically illustrating the structure of a data record D23R included in the member association table D23.

The member association table D23 is a set of data records D23R illustrated in FIG. 6 for managing a user who performs a transaction processed by the POS system 30. The data record D23R includes fields F31 and F32. The field F31 shows a receipt ID. The field F32 shows a member code for identifying the user who performs the target transaction. In FIG. 6, values shown in the fields are examples.

The display data table D24 is a set of data records representing, in association with a receipt ID, various data to be displayed on a receipt screen showing a receipt identified by the receipt ID.

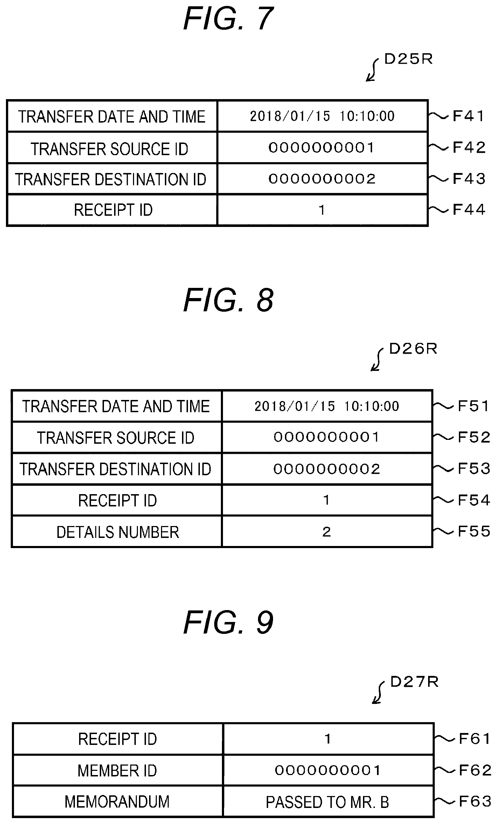

FIG. 7 is a diagram schematically illustrating the structure of a data record D25R included in the collective transfer table D25.

The collective transfer table D25 is a set of data records D25R for management concerning collective transfer explained below. The data record D25R includes fields F41 to F44. The field F41 shows date and time when the collective transfer is performed as transfer date and time. The field F42 shows a member ID of a user who transfers a receipt as a transfer source ID. The field F43 shows a member ID of a user who receives the transfer of the receipt as a transfer destination ID. The field F44 shows a receipt ID of the receipt set as a target of the collective transfer. In FIG. 7, values shown in the fields are examples.

FIG. 8 is a diagram schematically illustrating the structure of a data record D26R included in the partial transfer table D26.

The partial transfer table D26 is a set of data records D26R for management concerning partial transfer explained below. The data record D26R includes fields F51 to F55. The field F51 shows date and time when the partial transfer is performed as transfer date and time. The field F52 shows a member ID of a user who transfers a part of a receipt as a transfer source ID. The field F53 shows a member ID of a user who receives the transfer of a part of the receipt as a transfer destination ID. The field F54 shows a receipt ID of the receipt set as a target of the partial transfer. The field F55 shows a details number for identifying a receipt generated by the partial transfer. In FIG. 8, values shown in the fields are examples.

FIG. 9 is a diagram schematically showing the structure of a data record D27R included in the memorandum table D27.

The memorandum table D27 is a set of data records D27R for managing a memorandum set by the user concerning a receipt. The data record D27R includes fields F61 to F63. The field F61 shows a receipt ID of a receipt for which a memorandum is set. The field F62 shows a member code of a user who sets the memorandum. The field F63 shows text data serving as content of the memorandum. In FIG. 9, values shown in the fields are examples.

The operation of the electronic receipt system 100 configured as explained above is explained. A characteristic part of the operation of the electronic receipt system 100 in this embodiment is operation for enabling transfer of a receipt between users. Concerning, for example, collection of transaction data from the POS system 30 to the receipt server 20, for example, operation performed in an existing electronic receipt system can be diverted. Therefore, in the following explanation, explanation concerning operations to which these existing operations can be diverted is omitted. Content of processing explained below is an example. Various kinds of processing capable of obtaining the same result can be used as appropriate.

First, prior to explaining operation related to transfer of a receipt, a list of a user at a transfer destination (hereinafter referred to as acquaintance list) is explained.

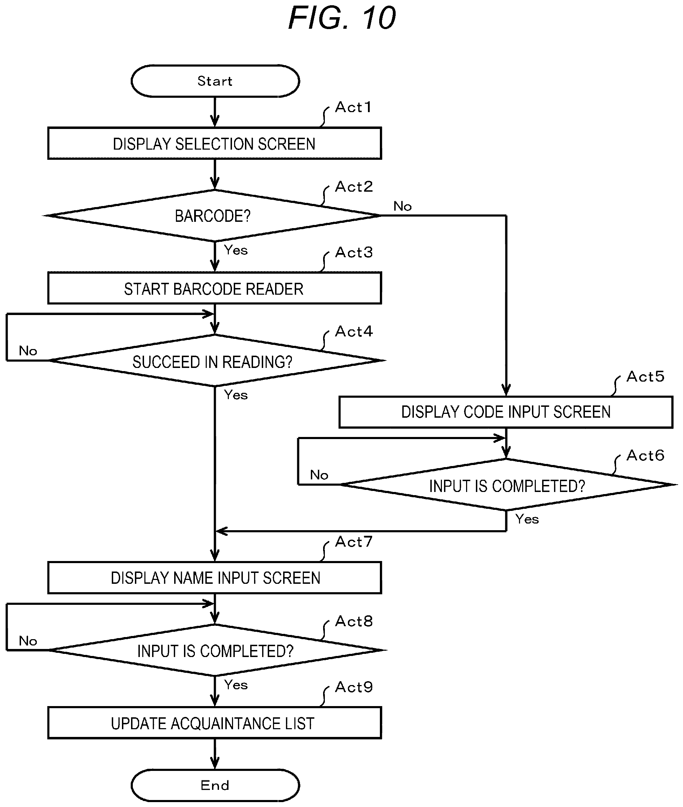

FIG. 10 is a flowchart illustrating a processing procedure of the processor 11 concerning update of the acquaintance list in the information terminal apparatus 10. The processor 11 executes this processing according to the receipt client application P11.

In Act 1, the processor 11 causes the touch panel 14 to display a selection screen. The selection screen is a screen for causing the user to select whether a member code of the user added to the acquaintance list is input by barcode reading or direct input.

In Act 2, the processor 11 confirms whether barcode reading is designated. If predetermined operation for designating the barcode reading is performed by the user, the processor 11 proceeds to Act 3.

In Act 3, the processor 11 starts a barcode reader including the camera 15. The processor 11 realizes a function of the barcode reader by executing information processing conforming to another application program. That is, the processor 11 reads a barcode reflected in an image photographed by the camera 15.

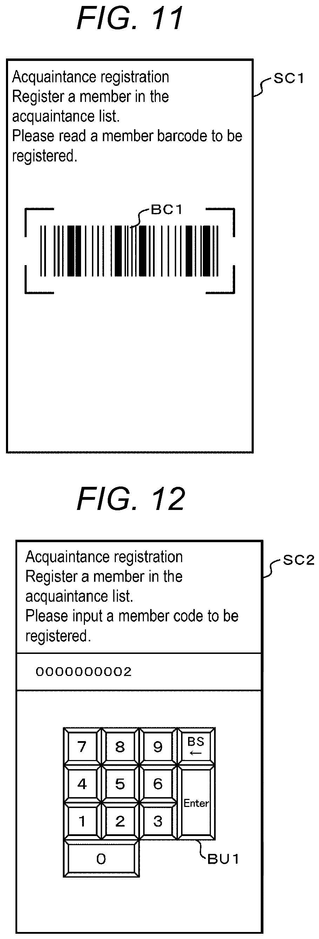

FIG. 11 is a diagram illustrating an example of a display screen SC1 in the touch panel 14 in a state in which the barcode reading is performed.

In FIG. 11, a situation is illustrated in which a barcode BC1 set as a target of reading is reflected in a photographed image and is shown on the display screen SC1.

In Act 4, the processor 11 waits for the user to succeed in the barcode reading. If the barcode is read as explained above, the processor 11 determines Yes and proceeds to Act 7.

On the other hand, if the user performs predetermined operation for designating direct input, the processor 11 determines No in Act 2 and proceeds to Act 5.

In Act 5, the processor 11 causes the touch panel 14 to display a code input screen. The code input screen is a screen for causing the user to directly input a member code.

FIG. 12 is a diagram illustrating an example of a code input screen SC2.

The code input screen SC2 shows a state in which "0000000002" is already input as a member code.

In Act 6, the processor 11 waits for the input of the member code to be completed. If predetermined operation for declaring completion of the input of the member code is performed by the user, the processor 11 determines Yes and proceeds to Act 7. The processor 11 determines Yes in Act 6 according to, for example, detection by the touch panel 14 of a touch on a button BU1 included in the code input screen SC2.

In Act 7, the processor 11 causes the touch panel 14 to display a name input screen. The name input screen is a screen for causing the user to input a name associated with the member code.

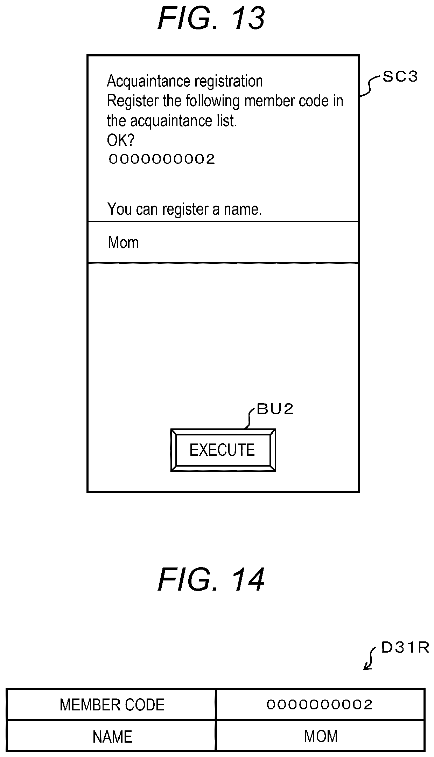

FIG. 13 is a diagram illustrating an example of a name input screen SC3. The name input screen SC3 shows a state in which "mom" is already input as a name.

In Act 8, the processor 11 waits for the input of the name to be completed. If predetermined operation for declaring completion of the input of the name is performed by the user, the processor 11 determines Yes and proceeds to Act 9. The processor 11 determines Yes in Act 8 according to detection by the touch panel 14 of a touch on a button BU2 included in the name input screen SC3.

In Act 9, the processor 11 updates the acquaintance list to include a data record in which the member ID represented by the read barcode or the directly input member ID is associated with the input name. Then, the processor 11 ends the information processing illustrated in FIG. 10.

FIG. 14 is a diagram schematically illustrating the structure of a data record D31R of the acquaintance list.

The acquaintance list is a set of a plurality of data records D31R. If the acquaintance list is absent, the processor 11 creates anew an acquaintance list including only the data record D31R in which the member ID represented by the read barcode or the directly input member ID is associated with the input name. The acquaintance list is stored in the auxiliary storage device 13. However, the acquaintance list may be stored in the auxiliary storage device 23. In this case, the processor 11 notifies the member ID represented by the read barcode or the directly input member ID and the input name to the receipt server 20 and requests update of the acquaintance list. In response to this request, the processor 21 updates the acquaintance list stored in the auxiliary storage device 23 in the same manner as explained above.

While the electronic receipt system 100 is operated, the commodity master D11, the classification master D12, the company master D13, and the store master D14 are updated by the processor 21 according to an instruction by a person in charge of maintenance or the like. The member master D15 is updated by the processor 21 according to the user, for example, accessing the receipt server 20 using the information terminal apparatus 10 and requesting new member registration or change of member registration. According to transaction data being transmitted from the POS system 30 to the receipt server 20, the header table D21, the details table D22, and the member association table D23 are updated by the processor 21 to respectively include the data records D21R, D22R, and D23R including various data represented by the transaction data. The display data table D24 is updated by the processor 21 at predetermined timing to show a receipt screen based on contents of the master data group D10 and the transaction data group D20 at that point in time.

The processor 21 executes, according to the receipt server application P21, information processing for such update of the various data. The processor 21 manages the transaction data using the header table D21, the details table D22, and the member association table D23 according to such information processing in association with a member code, which is an example of an identification code for identifying an individual. The processor 21 executes the information processing based on the receipt server application P21 in this way, whereby the computer including the processor 21 as the central part functions as a managing section.

If the user desires to confirm a receipt, the user performs operation for designating a viewing start in the information terminal apparatus 10 in which the processor 11 is executing the information processing based on the receipt client application P11. According to this operation, the processor 11 starts the following information processing based on the receipt client application P11. The processor 11 performs well-known processing for user authentication in conjunction with the processor 21 before starting the following information processing. Consequently, the processor 21 recognizes a member ID of the user who is using the information terminal apparatus 10.

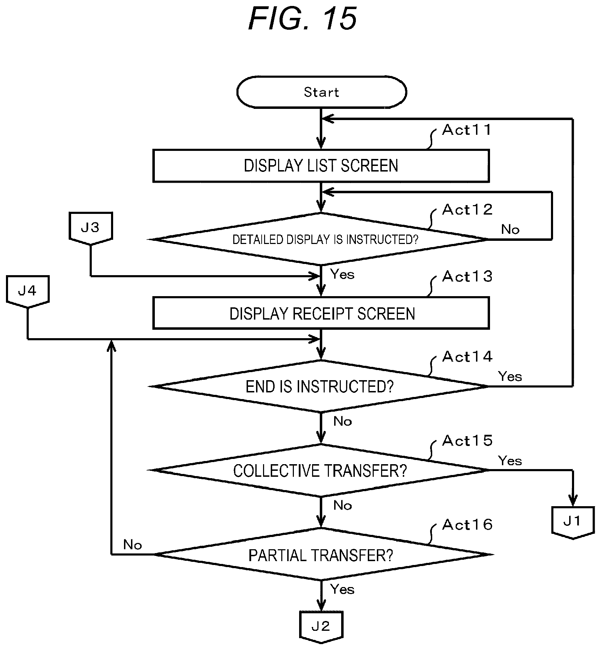

FIGS. 15, 16, and 17 are flowcharts of the information processing by the processor 11.

In Act 11 in FIG. 15, the processor 11 displays a list screen. The list screen is a screen showing a list of receipt associated with the user who is using the information terminal apparatus 10. Specifically, the processor 11 requests the receipt server 20 to transmit the list screen. In response to the request, the processor 21 extracts, from the member association table D23, all the data records D23R in which the member ID of the user who is using the information terminal apparatus 10 is shown in the fields F32. The processor 21 generates a list screen showing a list of receipts identified by a receipt ID shown in the field F31 of the extracted data record D23R and transmits data representing the list screen to the information terminal apparatus 10. The processor 11 causes the touch panel 14 to display the list screen represented by the data transmitted from the receipt server 20 in this way.

The user selects a receipt, details of which the user is about to confirm, on the list screen and performs, on the touch panel 14, operation for instructing detailed display concerning the receipt.

In Act 12, the processor 11 waits for the instruction for the detailed display explained above to be performed. If the instruction for the detailed display is performed, the processor 11 determines Yes and proceeds to Act 13.

In Act 13, the processor 21 displays a receipt screen. The receipt screen is a screen showing details of a receipt, display of a detailed screen of which is instructed (hereinafter referred to as designated receipt). Specifically, the processor 11 requests, involving notification of a receipt ID of the designated receipt, the receipt server 20 to transmit the receipt screen. In response to this request, the processor 21 generates a receipt screen showing details of the receipt identified by the notified receipt ID and transmits the receipt screen to the information terminal apparatus 10.

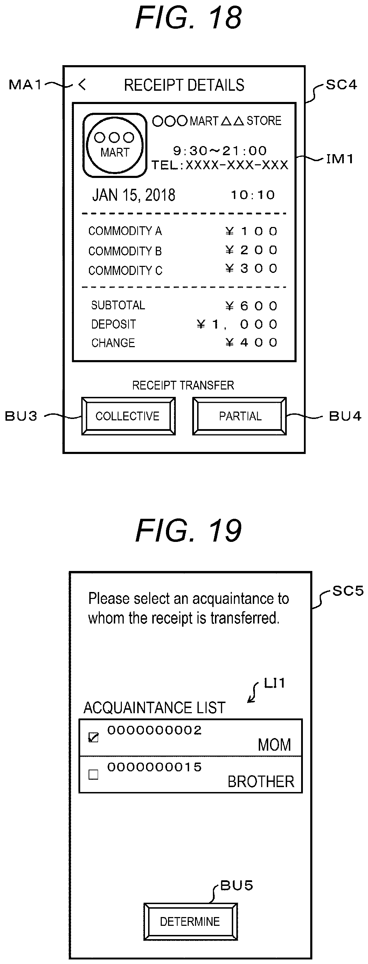

FIG. 18 is a diagram illustrating an example of a receipt screen SC4.

The receipt screen SC4 includes an image IM1, a mark MA1, and buttons BU3 and BU4. The image IM1 is an image imitating an image shown on a receipt issued by being printed on paper in the past. The image IM1 shows content of a transaction concerning the designated receipt. The mark MA1 is a GUI (graphical user interface) element for the user to designate return of the display screen to the list screen. The buttons BU3 and BU4 are GUI elements for the user to instruct a start of the collective transfer or the partial transfer.

In Act 14, the processor 11 confirms whether an end of the display of the receipt screen is instructed. If the instruction is not performed, the processor 11 determines No and proceeds to Act 15.

In Act 15, the processor 11 confirms whether the start of the collective transfer is instructed. If the instruction is not performed, the processor 11 determines No and proceeds to Act 16.

In Act 16, the processor 11 confirms whether the start of the partial transfer is instructed. If the instruction is not performed, the processor 11 determines No and returns to Act 14.

In this way, in Acts 14 to 16, the processor 11 waits for any one of the end, the start of the collective transfer, and the start of the partial transfer to be instructed.

For example, if the user finishes confirming the receipt screen SC4 and desires to confirm, for example, another receipt, the user instructs an end of the display by, for example, touching the mark MA1. If the end of the display is instructed in this way, the processor 11 determines Yes in Act 14 and repeats Act 11 and subsequent acts in the same manner as explained above.

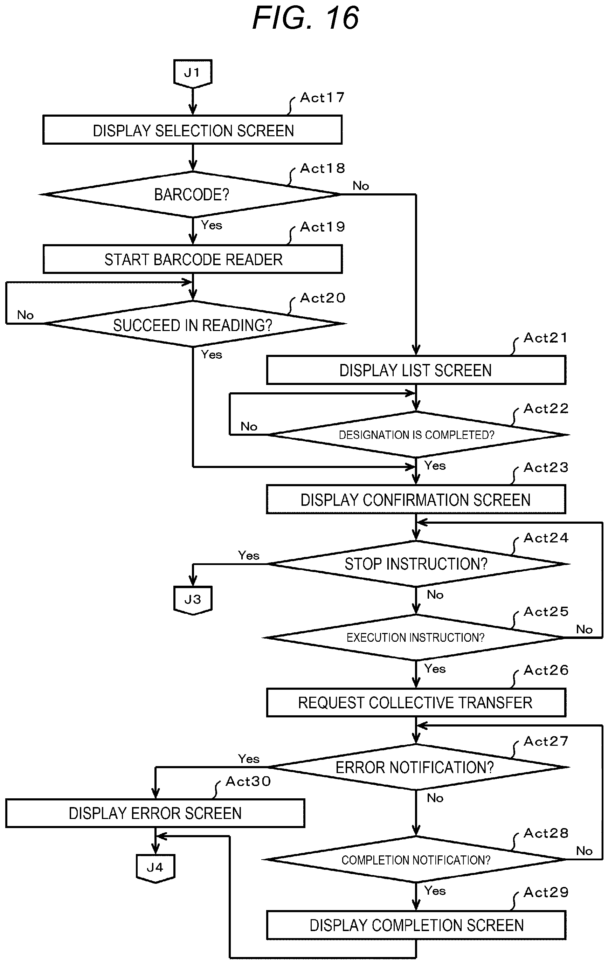

If the user (hereinafter referred to as transfer source user) desires to collectively transfer a receipt shown on the receipt screen SC4 to another user (hereinafter referred to as transfer destination user), the transfer source user instructs the start of the collective transfer by, for example, touching the button BU3. According to this instruction, the processor 11 determines Yes in Act 15 and proceeds to Act 17 in FIG. 16.

In Act 17, the processor 11 causes the touch panel 14 to display a selection screen. The selection screen is a screen for causing the transfer source user to select a designation method for the transfer destination user. The selection screen includes a GUI element for the user to designate barcode reading and a GUI element for the user to designate list selection.

In Act 18, the processor 11 confirms whether the barcode reading is designated as the designation method. If the barcode reading is designated, the processor 11 determines Yes in Act 18 and proceeds to Act 19.

In Act 19, the processor 11 starts the barcode reader. The transfer source user holds a barcode representing a member code of the transfer destination user over a field of view of the camera 15.

In Act 20, the processor 11 waits for the barcode reading to be completed.

On the other hand, if the list selection is designated by the transfer source user, the processor 11 determines No in Act 18 and proceeds to Act 21.

In Act 21, the processor 11 causes the touch panel 14 to display a list screen.

FIG. 19 is a diagram illustrating an example of a list screen SC5.

The list screen SC5 includes a list LI1 and a button BU5. The list LI1 shows a list of member IDs and names shown in the data records D31R included in the acquaintance list. The list LI1 shows checkboxes respectively associated with the member IDs. The button BU5 is a GUI element for the user to designate that the transfer destination user is determined by setting in the list LI1.

In Act 22, the processor 11 waits for the designation of the transfer destination to be completed.

The transfer source user selects the transfer destination user out of the users shown in the list LI1 and touches a region where a member code and a name of the transfer destination user are displayed. If the processor 11 is in the waiting state in Act 22, the processor 11 sets a member ID shown in the touched region as a candidate of a member ID of the transfer destination user, that is, a transfer destination ID and adds a checkmark to a checkbox associated with the member ID. Which user is set as a candidate may be shown using another display method such as reversed display or highlighted display. On the list screen SC5, a state is shown in which a user, whose member ID is "0000000002" and whose name is "mom", is set as a candidate of the transfer destination user. In a state in which a desired transfer destination user is set, the transfer source user declares designation completion by, for example, touching the button BU5. The processor 11 determines Yes in Act 22 in response to this declaration and proceeds to Act 23.

If the barcode reading is designated and the processor 11 is in the waiting state in Act 20 and the barcode reader succeeds in the barcode reading, the processor 11 determines Yes in Act 20 and proceeds to Act 23.

As explained above, the processor 11 determines the member ID of the transfer destination user according to the barcode reading or the list designation. The transfer destination user is different from the transfer source user, who is the user associated with the designated receipt. Therefore, the processor 11 determines the member ID serving as an identification code of such a user. In this way, the processor 11 executes the information processing based on the receipt client application P11, whereby the computer including the processor 11 as the central part functions as a determining section.

In Act 23, the processor 11 causes the touch panel 14 to display a confirmation screen. The confirmation screen is a screen for causing the transfer source user to confirm content of the collective transfer about to be executed.

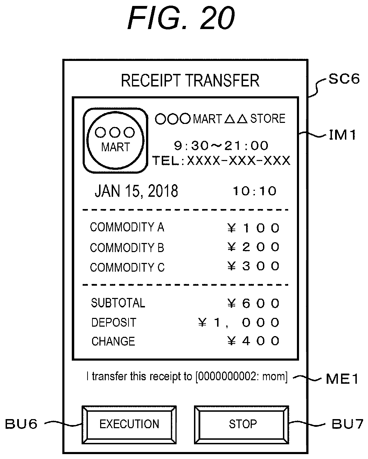

FIG. 20 is a diagram illustrating an example of a confirmation screen SC6. In FIG. 20, the same display elements as the display elements illustrated in FIG. 18 are denoted by the same reference numerals and signs. Explanation of the display elements is omitted.

The confirmation screen SC6 includes the image IM1, a message ME1, and buttons BU6 and BU7. The image IM1 is also included in the receipt screen SC4 illustrated in FIG. 18. That is, the confirmation screen SC6 illustrated in FIG. 20 is displayed after the receipt screen SC4 illustrated in FIG. 18 according to the button BU3 on the receipt screen SC4 being touched. The message ME1 is a character message showing explanation concerning the collective transfer. The processor 11 adds a character string representing a user designated as a transfer destination to a character string of a fixed form to create the message ME1. At this time, if reading of a barcode is performed by the barcode reader, the processor 11 sets, as the transfer destination, a user identified by a member ID shown in the barcode. If designation of a user is performed by the list selection, the processor 11 sets the designated user as the transfer destination. The message ME1 is an example in which a user, whose member ID is "0000000002" and whose name is "mom", is designated as the transfer destination by the list selection. If the transfer destination is designated by the barcode reading, the member ID is shown and the name is not shown in the message ME1. The button BU6 is a GUI element for the user to instruct execution of the collective transfer. The button BU7 is a GUI element for the user to instruct a stop of the collective transfer.

In Act 24, the processor 11 confirms whether a stop instruction is performed. If the instruction is not performed, the processor 11 determines No and proceeds to Act 25.

In Act 25, the processor 11 confirms whether an execution instruction is performed. If the instruction is not performed, the processor 11 determines No and returns to Act 24.

In this way, in Acts 24 and 25, the processor 11 waits for the stop instruction and the execution instruction to be performed.

If the transfer source user determines to cancel the collective transfer after confirming the confirmation screen SC6, the transfer source user instructs a stop by, for example, touching the button BU7. The processor 11 determines Yes in Act 24 according to this instruction, returns to Act 13 in FIG. 15, and thereafter repeats the same processing as explained above. The processor 11 may return to Act 11 or may end the information processing illustrated in FIGS. 15 to 17.

If the transfer source user determines to execute the collective transfer after confirming the confirmation screen SC6, the transfer source user instructs execution by, for example, touching the button BU6. The processor 11 determines Yes in Act 25 according to this instruction and proceeds to Act 26.

In Act 26, the processor 11 requests the receipt server 20 to perform the collective transfer. At this time, the processor 11 notifies a receipt ID and a transfer destination ID to the receipt server 20. The processor 11 executes the information processing based on the receipt client application P11 in this way, whereby the computer including the processor 11 as the central part functions as a notifying section that notifies a member ID serving as an identification code to be associated with transaction data anew. The receipt ID notified by the processor 11 is a receipt ID for identifying a receipt designated most lately in the waiting state in Act 12.

This request is transmitted to the receipt server 20 by the communication network 40 and received by the communication interface 24. In response to the request, the processor 21 executes the following information processing based on the receipt server application P21.

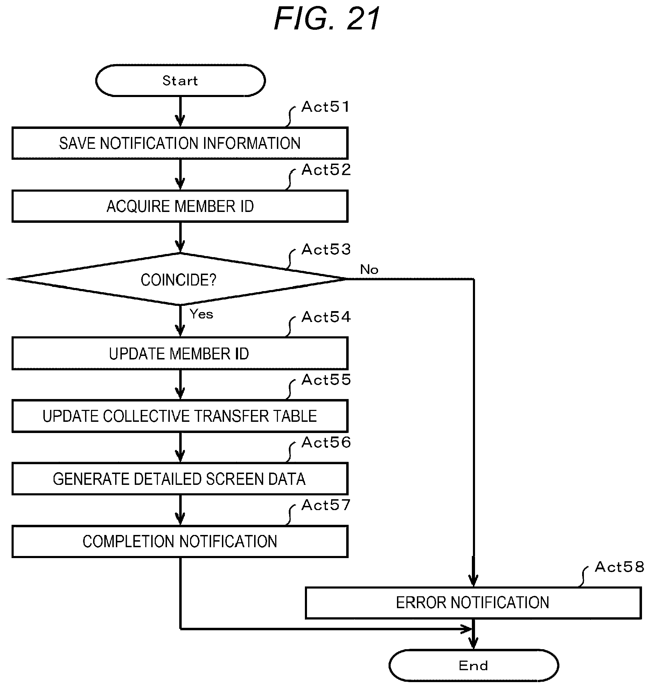

FIG. 21 is a flowchart of the information processing by the processor 21.

In Act 51, the processor 21 saves notification information from the information terminal apparatus 10 in the main memory 22 or the auxiliary storage device 23. That is, the processor 21 saves the receipt ID and the transfer destination ID notified from the information terminal apparatus 10 by the processing of the processor 11 explained above in the main memory 22 or the auxiliary storage device 23. If any other data is notified together with the request for the collective transfer, the processor 21 also saves the data in the main memory 22 or the auxiliary storage device 23.

The transfer destination ID is an example of an identification code different from a transfer source ID serving as an identification code associated with transaction data concerning a receipt set as a target of transfer. Therefore, saving the transfer destination ID in the main memory 22 or the auxiliary storage device 23 is equivalent to acquiring an identification code different from the identification code associated with the transaction data. The processor 21 executes the information processing based on the receipt server application P21 in this way, whereby the computer including the processor 21 as the central part functions as an acquiring section.

In Act 52, the processor 21 acquires a member ID associated with the receipt ID notified in the request in the member association table D23.

In Act 53, the processor 21 confirms whether the member ID acquired as explained above coincides with the transfer source ID. The processor 21 sets, as the transfer source ID, a member ID associated with a session ID already set, for example, in order to transmit a list screen to the information terminal apparatus 10. Alternatively, the information terminal apparatus 10 may notify the transfer source ID as well in the request for the collective transfer. If both the IDs coincide, the processor 21 determines Yes and proceeds to Act 54.

In Act 54, the processor 21 updates the member ID associated with the receipt ID (hereinafter referred to as transfer receipt ID) notified in the request in the member association table D23 to the transfer destination ID. Consequently, association concerning a receipt identified by the transfer receipt ID is changed from the transfer source ID to the transfer destination ID. That is, the receipt is transferred from the transfer source user to the transfer destination user.

Consequently, the transaction data managed in association with the transfer source ID so far is thereafter managed in association with the transfer destination ID. The processor 21 executes the information processing based on the receipt server program P21 in this way, whereby the computer including the processor 21 as the central part functions as a control section that controls the transaction data to be managed in association with an identification code different from the identification code associated so far.

In Act 55, the processor 21 updates the collective transfer table D25. Specifically, the processor 21 creates a new data record D25R concerning the collective transfer of this time and updates the collective transfer table D25 to include the new data record D25R. The processor 21 sets a value representing the present date and time, the transfer source ID, the transfer destination ID, and the transfer receipt ID respectively in the fields F41 to F44 of the new data record D25R. Consequently, it is possible to manage the collective transfer of this time based on the collective transfer table D25.

In Act 56, the processor 21 generates a receipt screen to be displayed by the information terminal apparatus 10 that requests the collective transfer.

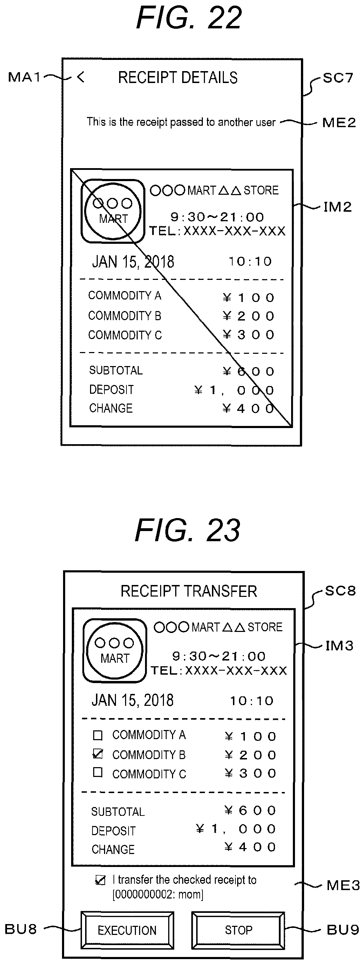

FIG. 22 is a diagram illustrating an example of a receipt screen SC7. In FIG. 22, the same display elements as the display elements illustrated in FIG. 18 are denoted by the same reference numerals and signs. Explanation of the display elements is omitted.

The receipt screen SC7 is generated if the processor 21 executes the information processing illustrated in FIG. 21 according to the button BU6 on the confirmation screen SC6 in the state illustrated in FIG. 20 being touched.

The receipt screen SC7 includes an image IM2, the mark MA1, and a message ME2. The image IM2 is obtained by adding an oblique line to the image IM1. Consequently, the image IM2 causes, while enabling a viewer to confirm content of a transferred receipt, the viewer to recognize that the transfer source user does not currently have the receipt. The message ME2 is a predetermined character message for informing that the receipt is already transferred.

In Act 57, the processor 21 performs completion notification to the information terminal apparatus 10 that requests the collective transfer. The completion notification is notification for notifying that the collective transfer is normally completed. In the completion notification, the processor 21 transmits the receipt screen SC7 to the information terminal apparatus 10. Then, the processor 21 ends the information processing illustrated in FIG. 21.

If the member ID acquired in Act 52 is different from the transfer source ID, the processor 21 determines No in Act 53 and proceeds to Act 58.

In Act 58, the processor 21 performs error notification to the information terminal apparatus 10 that requests the collective transfer. The error notification is notification for notifying that transfer of the receipt responding to the request of this time cannot be performed. Then, the processor 21 ends the information processing illustrated in FIG. 21.

In the information terminal apparatus 10, if finishing requesting the collective transfer in Act 26 in FIG. 16, the processor 11 proceeds to Act 27.

In Act 27, the processor 11 confirms whether error notification is performed. If the notification is not performed, the processor 11 determines No and proceeds to Act 28.

In Act 28, the processor 11 confirms whether completion notification is performed. If the notification is not performed, the processor 11 determines No and returns to Act 27.

In this way, in Acts 27 and 28, the processor 11 waits for the error notification or the completion notification to be performed. The processor 11 determines Yes in Act 28 according to the completion notification by the processor 21 being received by the communication interface 16 and proceeds to Act 29.

In Act 29, the processor 11 causes the touch panel 14 to display the receipt screen SC7 transmitted in the completion notification.

On the other hand, the processor 11 determines Yes in Act 27 according to the error notification by the processor 21 being received by the communication interface 16 and proceeds to Act 30.

In Act 30, the processor 11 causes the touch panel 14 to display an error screen. The error screen is a screen for informing the user with a character message or the like that the transfer of the receipt based on the request is not successfully performed. The error screen includes a mark, which is a GUI element for the user to designate return of the display screen to the list screen but does not include a GUI element for instructing a start of the collective transfer and the partial transfer.

If finishing the display of the screen in Act 29 or 30, the processor 11 returns to the waiting state in Acts 14 to 16 in FIG. 15. At this time, irrespective of which of the receipt screen SC7 and the error screen is displayed, a start of the collective transfer or the partial transfer is not instructed but an end instruction can be performed. That is, at this time, the processor 11 always determines No in Acts 15 and 16 and waits for the end instruction to be performed.

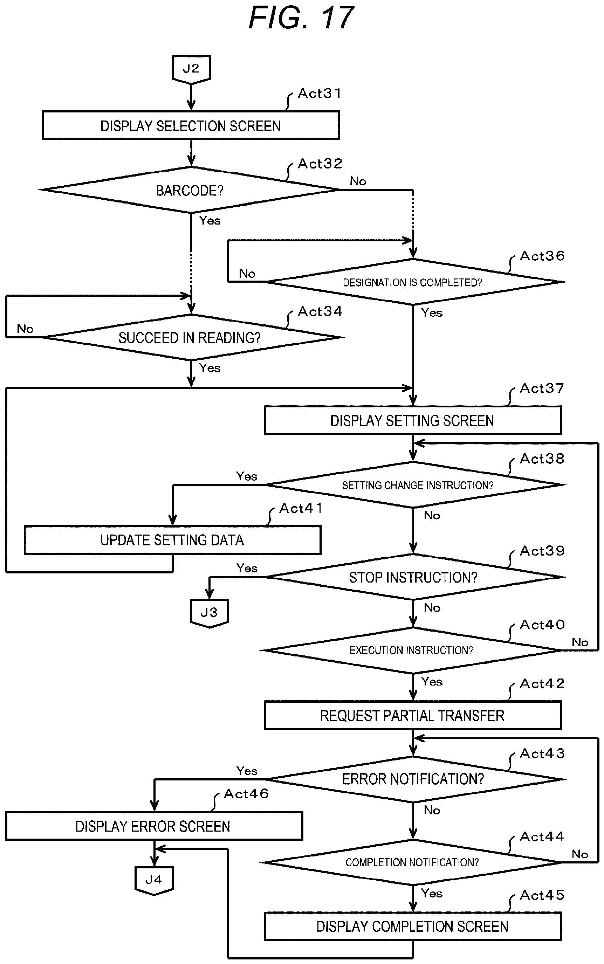

If the receipt screen SC4 is displayed and the transfer source user desires to transfer a part of the designated receipt shown on the receipt screen SC4 to another transfer destination user, the transfer source user instructs a start of the partial transfer by, for example, touching the button BU4. The processor 11 determines Yes in Act 16 according to this instruction and proceeds to Act 31 in FIG. 17.

In Acts 31 to 36, the processor 11 executes the same processing as the processing in Acts 17 to 22 in FIG. 16. Acts 33 and 35 equivalent to Acts 19 and 21 in FIG. 16 is not illustrated in FIG. 17. If determining Yes in Act 34 or 36, the processor 11 proceeds to Act 37.

In Act 37, the processor 11 causes the touch panel 14 to display a setting screen. The setting screen is a screen for causing the transfer source user to perform designation of a commodity set as a target of transfer.

FIG. 23 is a diagram illustrating an example of a setting screen SC8.

The setting screen SC8 includes an image IM3, a message ME3, and buttons BU8 and BU9. The setting screen SC8 illustrated in FIG. 23 is an example of a screen displayed after the receipt screen SC4 illustrated in FIG. 18 according to the button BU4 on the receipt screen SC4 being touched. The image IM3 shows content of a designated receipt at the time when the button BU4 is touched. The image IM3 shows checkboxes respectively beside commodities shown in the image IM3. The message ME3 is a character message for informing that a receipt for a commodity associated with a checkbox with a checkmark is transferred to the transfer destination user. The processor 11 adds a character string representing a user designated as a transfer destination to a character string of a fixed form to create the message ME3. The message ME3 is an example in which a user, whose member ID is "0000000002" and whose name is "mom", is designated as the transfer designation. If the transfer destination is designated by the barcode reading, a member ID is shown and a name is not shown in the message ME3. The button BU8 is a GUI element for the user to instruct execution of the partial transfer. The button BU9 is a GUI element for the user to instruct a stop of the partial transfer.

In Act 38, the processor 11 confirms whether a setting change instruction is performed. If the instruction is not performed, the processor 11 determines No and proceeds to Act 39.

In Act 39, the processor 11 confirms whether a stop instruction is performed. If the instruction is not performed, the processor 11 determines No and proceeds to Act 40.

In Act 40, the processor 11 confirms whether an execution instruction is performed. If the instruction is not performed, the processor 11 determines No and returns to Act 38.

In this way, in Acts 38 to 40, the processor 11 waits for the setting change instruction, the stop instruction, or the execution instruction to be performed.

The transfer source user selects a commodity to be included in the receipt to be transferred out of the commodities shown in the image IM3. If a checkmark is not shown in a checkbox shown beside the commodity, the transfer source user touches the checkbox. If a checkmark is shown in a checkbox shown beside a commodity not to be included in the receipt to be transferred, the transfer source user touches the checkbox.

If such touch on the checkbox is detected by the touch panel 14, the processor 11 determines Yes in Act 38 and proceeds to Act 41.

In Act 41, the processor 11 updates setting data. The setting data is data indicating which commodity is included in the receipt to be transferred among the commodities shown in the designated receipt. If a checkbox associated with a commodity not to be included in the receipt to be transferred is touched, the processor 11 adds a commodity code of the commodity to the setting data. If a checkbox associated with a commodity identified by a commodity code included in the setting data is touched, the processor 11 deletes the commodity code from the setting data. Thereafter, the processor 11 returns to Act 37. However, at this time, in Act 37, the processor 11 shows checkmarks in the checkboxes according to the setting data after update. In this way, the image IM3 illustrated in FIG. 23 shows an example in a state in which only a commodity, a commodity name of which is "commodity B", is designated as the commodity to be included in the receipt to be transferred.

Each of a plurality of commodities transacted in one transaction is an example of a transaction item. The commodity to be included in the receipt to be transferred is equivalent to a transition item. That is, updating the setting data according to an instruction of the transfer source user is equivalent to setting the transition item. The processor 11 executes the information processing based on the receipt client application P11 in this way, whereby the computer including the processor 11 as the central part functions as a setting section that sets such a transition item.

If the transfer source user determines to cancel the partial transfer irrespective of a setting situation of the commodity to be included in the receipt to be transferred, the transfer source user instructs a stop by, for example, touching the button BU9. The processor 11 determines Yes in Act 39 according to this instruction, returns to Act 13 in FIG. 15, and thereafter repeats the same processing as explained above. The processor 11 may return to Act 11 or may end the information processing illustrated in FIGS. 15 to 17.

If the transfer source user finishes setting all commodities to be included in the receipt to be transferred and determines to transfer the receipt including all the commodities to the transfer destination user, the transfer source user instructs execution by, for example, touching the button BU8. The processor 11 determines Yes in Act 40 according to this instruction and proceeds to Act 42.

In Act 42, the processor 11 requests the receipt server 20 to perform the partial transfer. At this time, the processor 11 notifies the receipt ID, the transfer destination ID, and the setting data to the receipt server 20. The processor 11 executes the information processing based on the receipt client application P11 in this way, whereby the computer including the processor 11 as the central part functions as a notifying section that notifies a member ID serving as an identification code to be associated with transaction data anew and a commodity determined as a transition item. The receipt ID notified by the processor 11 is a receipt ID for identifying a receipt most lately designated in the waiting state in Act 12.

This request is transmitted to the receipt server 20 by the communication network 40 and received by the communication interface 24. The processor 21 executes the following information processing based on the receipt server application P21 in response to the request.

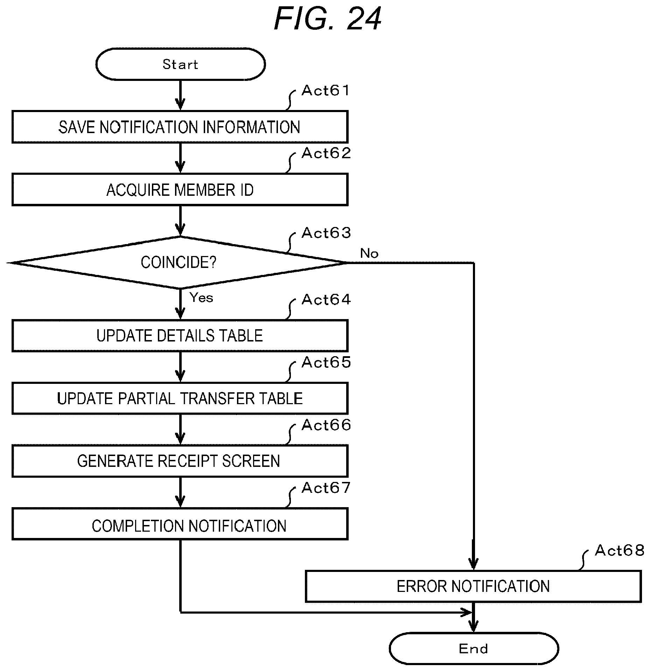

FIG. 24 is a flowchart of the information processing by the processor 21.

In Act 61, the processor 21 saves notification information from the information terminal apparatus 10 in the main memory 22 or the auxiliary storage device 23. That is, the processor 21 saves the receipt ID, the transfer destination ID, and the setting data notified from the information terminal apparatus 10 by the processing of the processor 11 explained above in the main memory 22 or the auxiliary storage device 23. If any other data is notified together with the request for the partial transfer, the processor 21 also saves the data in the main memory 22 or the auxiliary storage device 23.

The transfer destination ID is an example of an identification code different from a transfer source ID serving as an identification code associated with transaction data concerning a receipt set as a target of transfer. The setting data represents a commodity serving as a transition item. Therefore, saving the transfer destination ID and the setting data in the main memory 22 or the auxiliary storage device 23 is equivalent to acquiring the identification code different from the identification code associated with the transaction data and the transition item. The processor 21 executes the information processing based on the receipt server application P21 in this way, whereby the computer including the processor 21 as the central part functions as an acquiring section.

In Act 62, the processor 21 acquires a member ID associated with the receipt ID notified in the request in the member association table D23.

In Act 63, the processor 21 confirms whether the member ID acquired as explained above coincides with the transfer source ID. The processor 21 sets, as the transfer source ID, a member ID associated with a session ID already set, for example, in order to transmit a list screen to the information terminal apparatus 10. Alternatively, in the request for the collective transfer, the information terminal apparatus 10 may notify the transfer source ID as well. The processor 21 determines Yes if both the IDs coincide and proceeds to Act 64.

In Act 64, the processor 21 updates the details table D22. Specifically, the processor 21 extracts, from the details table D22, all data records D22R in which the receipt ID notified in the request is shown in the field F21 and the commodity code included in the setting data notified in the request is shown in the field F23. The processor 21 rewrites a value shown in the field F22 in the extracted data record D22R to another value. The processor 21 sets a new value of the field F22 to a value not shown in all the fields F22 of all the data records D22R in which the receipt ID notified in the request is shown in the fields F11. For example, the processor 21 determines the new value of the field F22 as a value larger by 1 than a maximum value shown in the fields F22 in all the data records D22R in which the receipt ID notified in the request is shown in the fields F11. The processor 21 adds, in response to a request from the POS system 30, new data records D21R, D22R, and D23R concerning a new receipt to the header table D21, the details table D22, and the member association table D23. In this case, the processor 21 sets, as a predetermined initial value, a value shown in the field F22 in the data record D22R. The initial value is typically "1". In Act 64 in first partial transfer, the processor 21 rewrites the value of the field F22 to a value larger than the initial value by 1, that is, typically "2". In this embodiment, the processor 11 does not prohibit further partial transfer from a partially transferred receipt or a receipt generated by transfer. Therefore, the value of the field F22 is sometimes set to a value larger than the initial value by 2 or more, that is, typically a value equal to or larger than "3".

Consequently, the commodity serving as the transition item managed in association with the transfer source ID so far is thereafter managed in association with the transfer destination ID. The processor 21 executes the information processing based on the receipt server program P21 in this way, whereby the computer including the processor 21 as the central part functions as a control section that controls the transition item to be managed in association with an identification code different from the identification code associated so far.

In Act 65, the processor 21 updates the partial transfer table D26. Specifically, the processor 21 creates a new data record D26R concerning the partial transfer of this time and updates the partial transfer table D26 to include the new data record D26R. The processor 21 sets a value indicating the present date and time, the transfer source ID, the transfer destination ID, the transfer receipt ID, and a details number respectively in the fields F51 to F55 of the new data record D26R. The details number is a value determined as the new value of the field F22 in Act 64.

Consequently, it is possible to manage the partial transfer of this time based on the partial transfer table D26.

In Act 66, the processor 21 generates a receipt screen to be displayed in the information terminal apparatus 10 that requests the partial transfer.

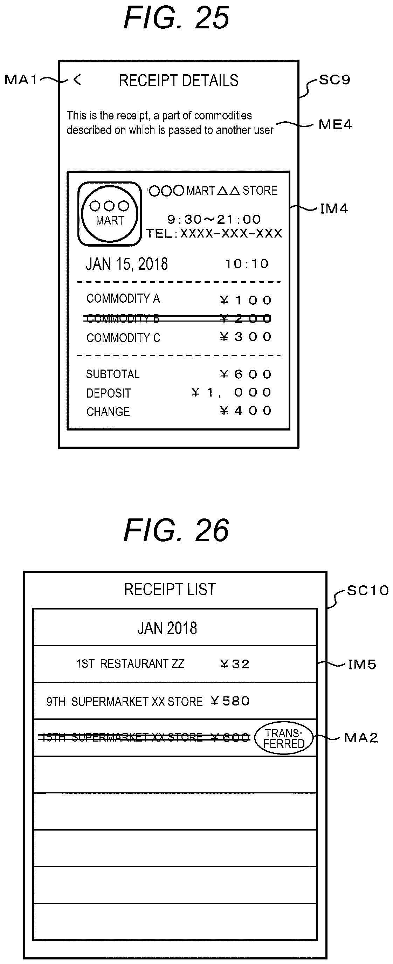

FIG. 25 is a diagram illustrating an example of a receipt screen SC9. In FIG. 25, the same display elements as the display elements illustrated in FIG. 18 are denoted by the same reference numerals and signs. Explanation of the display elements is omitted.

The receipt screen SC9 is generated if the processor 21 executes the information processing illustrated in FIG. 24 according to the button BU8 on the setting screen SC8 in the state illustrated in FIG. 23 being touched.

The receipt screen SC9 includes an image IM4, the mark MA1, and a message ME4. The image IM4 is obtained by adding a strike out line to the image IM1. The strike out line is shown to be superimposed on character strings indicating a commodity name and a price of a commodity included in the transferred receipt. Consequently, the image IM4 enables the transfer source user to confirm a commodity included in the transferred receipt and a commodity not included in the transferred receipt. The message ME4 is a predetermined character message for informing that the receipt is already partially transferred.

In Act 67, the processor 21 performs completion notification to the information terminal apparatus 10 that requests the partial transfer. The completion notification is notification for notifying that the partial transfer is normally completed. In the completion notification, the processor 21 transmits the receipt screen SC9 to the information terminal apparats 10. Then, the processor 21 ends the information processing illustrated in FIG. 24.

If the member ID acquired in Act 62 is different from the transfer source ID, the processor 21 determines No in Act 63 and proceeds to Act 68.

In Act 68, the processor 21 performs error notification to the information terminal apparats 10 that requests the partial transfer. The error notification is notification for notifying that the partial transfer of the receipt responding to the request of this time cannot be performed. Then, the processor 21 ends the information processing illustrated in FIG. 24.

In the information terminal apparatus 10, if finishing requesting the collective transfer in Act 42 in FIG. 17, the processor 11 proceeds to Act 43.

In Act 43, the processor 11 confirms whether error notification is performed. If the notification is not performed, the processor 11 determines No and proceeds to Act 44.

In Act 44, the processor 11 confirms whether completion notification is performed. If the notification is not performed, the processor 11 determines No and returns to Act 43.

In this way, in Acts 42 and 43, the processor 11 waits for the error notification or the completion notification to be performed. The processor 11 determines Yes in Act 44 according to the completion notification by the processor 21 being received by the communication interface 16 and proceeds to Act 45.

In Act 45, the processor 11 causes the touch panel 14 to display the receipt screen SC9 transmitted in the completion notification.

On the other hand, the processor 11 determines Yes in Act 43 according to the error notification by the processor 21 being received by the communication interface 16 and proceeds to Act 46.

In Act 46, the processor 11 causes the touch panel 14 to display an error screen. The error screen is a screen for informing the user with a character message or the like that the partial transfer of the receipt based on the request is not successfully performed. The error screen includes a mark, which is a GUI element for the user to designate return of the display screen to the list screen, but does not include a GUI element for instructing a start of the collective transfer and the partial transfer.

If finishing the display of the screen in Act 45 or 46, the processor 11 returns to the waiting state in Acts 14 to 16 in FIG. 15. At this time, irrespective of which of the receipt screen SC9 and the error screen is displayed, a start of the collective transfer or the partial transfer is not instructed but the end instruction can be performed. That is, at this time, the processor 11 always determines No in Acts 15 and 16 and waits for the end instruction to be performed.

In the receipt server 20, as explained above, the processor 21 generates the list screen and the receipt screen in response to the request from the information terminal apparatus 10 and transmits the list screen and the receipt screen to the information terminal apparatus 10 at the request source. However, the processor 21 generates the screens as explained below concerning the collective transfer or the partial transfer explained above.

FIG. 26 is a diagram illustrating an example of a list screen SC10 to be displayed in the information terminal apparatus 10 used by the transfer source user after performing the collective transfer.

The processor 21 checks the collective transfer table D25. If the data record D25R in which a member ID (hereinafter referred to as requester ID) of a user (hereinafter referred to as requester) who requests display is shown in the field F42 is present, the processor 21 generates the list screen SC10 illustrated in FIG. 26.

The list screen SC10 includes an image IM5. The image IM5 shows a list of receipts related to the requester. The image IM5 shows, as information for identifying each of the receipts, a purchase date, a store name, and a total amount with character strings. The image IM5 shows a strike out line over a character string concerning a receipt collectively transferred to another user among these character strings and shows a mark MA2 beside the character string. The mark MA2 is predetermined as a mark indicating that the receipt is transferred. The processor 21 discriminates the receipt collectively transferred to the other user as a receipt identified by a receipt ID shown in the field F44 in the data record D25R in which the requester ID is shown in the field F42.

Consequently, by viewing the image IM5, the user is capable of recognizing that the user does not already have a receipt identified by the character string on which the strike out line is superimposed. The user is capable of recognizing based on the mark MA2 that the user does not have the receipt because the receipt is transferred to the other user. That is, the user is capable of recognizing that the receipt is collectively transferred to the other user.

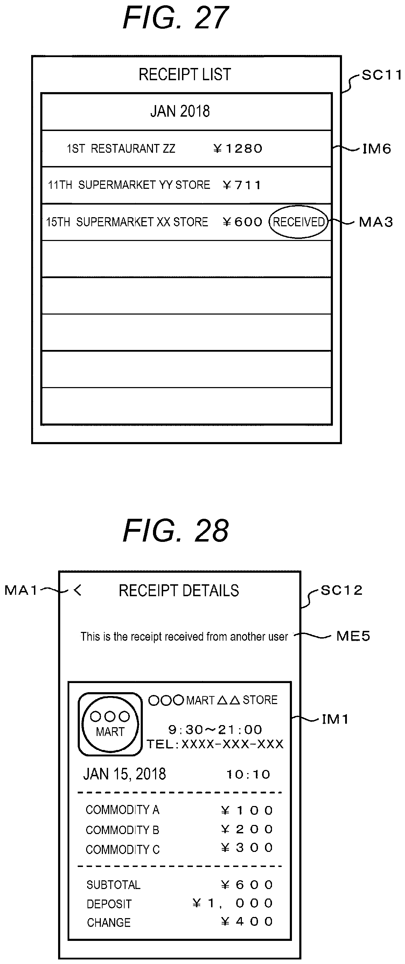

FIG. 27 is a diagram illustrating an example of a list screen SC11 to be displayed in the information terminal apparatus 10 used by the transfer destination user who receives the collective transfer.

The processor 21 checks the collective transfer table D25. If the data record D25R in which a member ID of a user who requests display of a list screen is shown in the field F43 is present, the processor 21 generates the list screen SC11 illustrated in FIG. 27.

The list screen SC11 includes an image IM6. The image IM6 shows a list of receipts related to the requester. The image IM6 shows a purchase date, a store name, and a total amount respectively with character strings as information for identifying each of the receipts. The image IM6 shows a mark MA3 beside a character string concerning a receipt transferred by the collective transfer among these character strings. The mark MA3 is predetermined as a mark indicating that the receipt is transferred from another user. The processor 21 discriminates the transferred receipt as a receipt identified by a receipt ID shown in the field F44 in the data record D25R in which the requester ID is shown in the field F43.

Consequently, by viewing the image IM6, the user is capable of recognizing that the receipt identified by the character string, beside which the mark MA3 is shown, is transferred from the other user.

FIG. 28 is a diagram illustrating an example of a receipt screen SC12 to be displayed in the information terminal apparatus 10 used by the transfer destination user who receives the collective transfer. In FIG. 28, the same display elements as the display elements illustrated in FIG. 18 are denoted by the same reference numerals and signs. Explanation of the display elements is omitted.

The processor 21 checks the collective transfer table D25. If the data record D25R in which a receipt ID of a designated receipt is shown in the field F44 is present, the processor 21 generates a receipt screen SC12 illustrated in FIG. 28.

The receipt screen SC12 includes the image IM1, the mark MA1, and a message ME5. That is, the receipt screen SC12 relates to the same receipt as the receipt of the receipt screen SC4 illustrated in FIG. 18. The receipt screen SC12 is an example of a screen for causing the transfer destination user to confirm a receipt transferred by the collective transfer executed according to the button BU3 on the receipt screen SC4 being touched.

The message ME5 is a character message of a fixed form showing explanation that the receipt is transferred from another user. However, the message ME5 may be, for example, a character string indicating, for example, one of a name and a member ID of the transfer source user instead of a character string "another user".

Consequently, by confirming the receipt screen SC12, the user is capable of confirming the transferred receipt as a receipt that the user has.

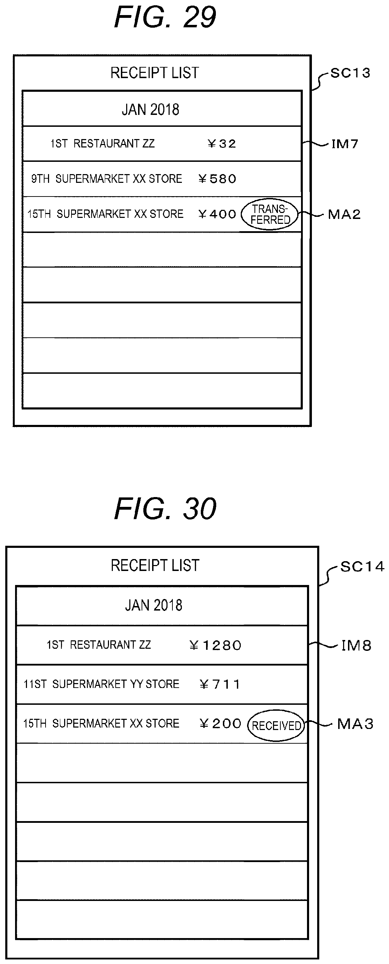

FIG. 29 is a diagram illustrating an example of a list screen SC13 to be displayed in the information terminal apparatus 10 used by the transfer source user after performing the partial transfer. In FIG. 29, the same display elements as the display elements illustrated in FIG. 26 are denoted by the same reference numerals and signs. Explanation of the display elements is omitted.

The processor 21 checks the partial transfer table D26. If the data record D26R in which a member ID of a user who requests display of a list screen is shown in the field F52 is present, the processor 21 generates a list screen SC13 illustrated in FIG. 29.

The list screen SC13 includes an image IM7. The image IM7 shows a list of receipts related to the requester. The image IM7 shows a purchase date, a store name, and a total amount respectively with character strings as information for identifying each of the receipts. However, concerning a character string concerning a receipt partially transferred to another user among these character strings, the image IM7 shows a total amount concerning a commodity not transferred. The image IM7 shows the mark MA2 beside a character string concerning the receipt partially transferred to the other user. The processor 21 discriminates the receipt partially transferred to the other user as a receipt identified by a receipt ID shown in the field F54 in the data record D26R in which the requester ID is shown in the field F52.

Consequently, by viewing the list screen SC13, the user is capable of recognizing that the receipt on which the mark MA2 is shown is a receipt that the user still has, although already being transferred, that is, the receipt partially transferred to the other user.

On the list screen SC13, another mark, a difference of which from the mark MA2 is recognizable by the user, may be shown instead of the mark MA2. Then, the user is capable of determining, only from a mark, whether transfer is the collective transfer or the partial transfer.

FIG. 30 is a diagram illustrating an example of a list screen SC14 to be displayed in the information terminal apparatus 10 used by the transfer destination user who receives the partial transfer. In FIG. 30, the same display elements as the display elements illustrated in FIG. 27 are denoted by the same reference numerals and signs. Explanation of the display elements is omitted.

The processor 21 checks the partial transfer table D26. If the data record D26R in which a requester ID is shown in the field F53 is present, the processor 21 generates a list screen SC14 illustrated in FIG. 30.

The list screen SC14 includes an image IM8. The image IM8 shows a list of receipt related to a requester. The image IM8 shows a purchase date, a store name, and a total amount respectively with character strings as information for identifying each of the receipts. However, concerning a character string concerning a receipt partially transferred from another user among these character strings, the image IM8 shows a total amount concerning a transferred commodity. The image IM8 shows the mark MA3 beside the character string concerning the receipt partially received from the other user. The processor 21 discriminates the receipt partially transferred from the other user as a receipt identified by a receipt ID shown in the field F54 in the data record D26R in which the requester ID is shown in the field F53.

Consequently, by viewing the list screen SC14, the user is capable of recognizing that the receipt identified by the character string shown beside the mark MA3 is transferred from the other user.

On the list screen SC14, another mark, a difference of which from the mark MA3 is recognizable by the user, may be shown instead of the mark MA3. Then, the user is capable of determining, only from a mark, whether transfer is the collective transfer or the partial transfer.

A plurality of conditions under which the processor 21 respectively generates the list screens SC10, SC11, SC13, and SC14 can simultaneously hold. In this case, the processor 21 generates a list screen in which strike out lines and marks shown on list screens corresponding to the held conditions are respectively shown in character strings concerning a plurality of receipts.

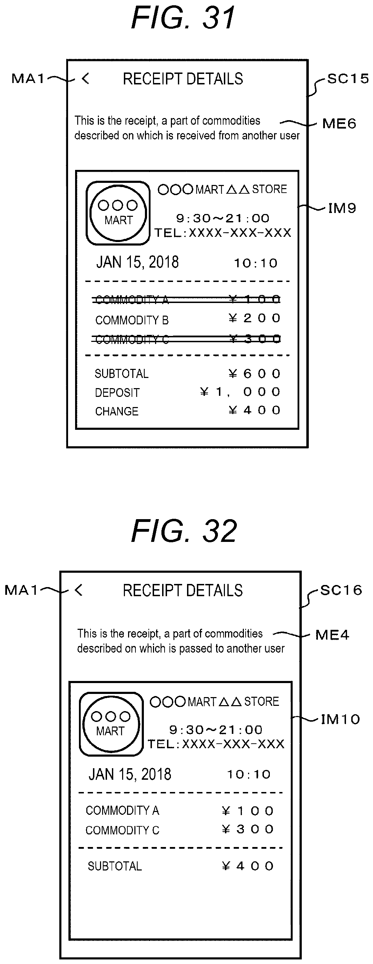

FIG. 31 is a diagram illustrating an example of a receipt screen SC15 to be displayed in the information terminal apparatus 10 used by the transfer destination user who receives the partial transfer. In FIG. 31, the same display elements as the display elements illustrated in FIG. 18 are denoted by the same reference numerals and signs. Explanation of the display elements is omitted.

The processor 21 checks the partial transfer table D26. If the data record D26R in which a receipt ID of a designated receipt is shown in the field F54 and a requester ID is shown in the field F53 is present, the processor 21 generates a receipt screen SC15 illustrated in FIG. 31.

The receipt screen SC15 includes an image IM9, the mark MA1, and a message ME6. The receipt screen SC15 is an example of a screen for causing the transfer destination user to confirm a receipt transferred by the partial transfer executed according to the button BU8 on the setting screen SC8 illustrated in FIG. 23 being touched.

The image IM9 is an image obtained by adding a strike out line to the image IM1. The strike out line is shown to be superimposed on a character string indicating a commodity name and a price of a commodity included in the transfer source receipt but is not included in the transferred receipt. Consequently, the image IM9 enables the user to confirm which commodity among commodities included in the transfer source receipt is included in a receipt transferred to the user. The message ME6 is a character message of a fixed form showing explanation that the receipt is transferred from another user concerning a part of commodities. However, the message ME6 may be a character string showing, for example, one of a name and a member ID of the transfer source user instead of a character string "another user".

Consequently, by confirming the receipt screen SC15, the user is capable of confirming a result of the transfer by the partial transfer as a receipt that the user has.

For example, if a first user performs settlement in a store in place of a second user, the first user is a transactor and a second user is a settler. The transactor and the settler are different. If the electronic receipt service is used concerning this transaction, in the receipt server 20, the transaction is managed in association with the first user, who is the settler, first. However, the first user and the second user perform the collective transfer respectively acting as the transfer source user and the transfer destination user, whereby the receipt server 20 manages the transaction in association with the second user, who is the transactor. In this way, with the receipt server 20, it is possible to manage the transaction in association with the transactor, for example, if the transactor and the settler are different.

For example, it is assumed that the first user collectively settles a total amount of a price concerning commodities purchased by the first user and a price concerning commodities purchased by the second user. In this case, the first user acts as a transactor and the second user acts as a settler concerning a part of the commodities set as settlement targets. The transactor and the settler are different. If the electronic receipt service is used concerning this transaction, in the receipt server 20, all transactions are managed in association with the first user, who is the settler, first. However, the first user and the second user perform the partial transfer respectively acting as the transfer source user and the transfer destination user, whereby the receipt server 20 manages a transaction concerning the commodities purchased by the second user in association with the second user, who is the transactor of the transaction. In this way, with the receipt server 20, it is possible to manage the transaction in association with the transactor, for example, if the transactor and the settler are different.

Various modified implementations explained below of this embodiment are possible.

The list screen and the receipt screen may be optionally decided by a designer of the receipt server 20, a creator of the receipt server application P21, an administrator of the receipt server 20, or the like.

Several modifications of the receipt screen are explained below.

### Modification 1

FIG. 32 is a diagram illustrating an example of a receipt screen SC16 to be displayed in the information terminal apparatus 10 used by the transfer source user after performing the partial transfer. In FIG. 32, the same display elements as the display elements illustrated in FIGS. 18 and 25 are denoted by the same reference numerals and signs. Explanation of the display elements is omitted.

The receipt screen SC16 is used instead of the receipt screen SC9 illustrated in FIG. 25. The receipt screen SC16 includes an image IM10, the mark MA1, and the message ME4. That is, the receipt screen SC16 is a screen showing the image IM10 instead of the image IM4 on the receipt screen SC9. The image IM10 shows a list concerning commodities associated with a requester, who is the transfer source user, among commodities set as targets of a transaction concerning a designated receipt and a total amount of the commodities.

### Modification 2

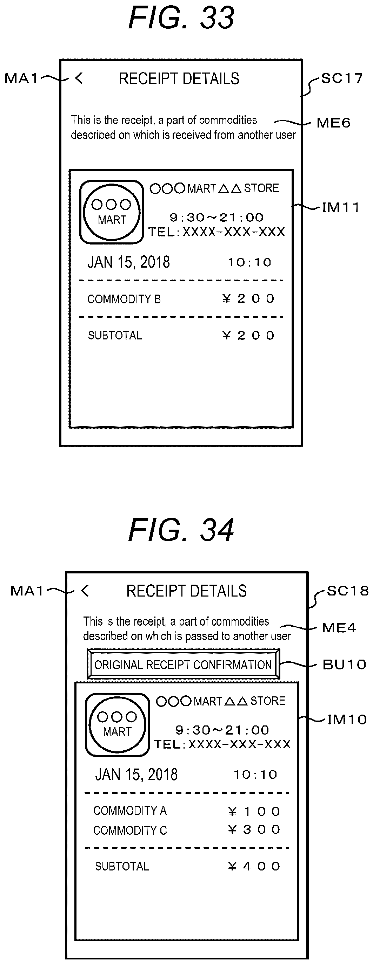

FIG. 33 is a diagram illustrating an example of a receipt screen SC17 to be displayed in the information terminal apparatus 10 used by the transfer destination user who receives the partial transfer. In FIG. 33, the same display elements as the display elements illustrated in FIGS. 18 and 31 are denoted by the same reference numerals and signs. Explanation of the display elements is omitted.

The receipt screen SC17 is used instead of the receipt screen SC15 illustrated in FIG. 31.

The receipt screen SC17 includes an image IM11, the mark MA1, and the message ME6. That is, the receipt screen SC17 is a screen showing the image IM11 instead of the image IM9 on the receipt screen SC15. The image IM11 shows a list concerning commodities associated with the requester, who is the transfer destination user, among commodities set as targets of a transaction concerning a designated receipt and a total amount of the commodities.

### Modification 3

FIG. 34 is a diagram illustrating an example of a receipt screen SC18 to be displayed in the information terminal apparatus 10 used by the transfer source user after performing the partial transfer. In FIG. 34, the same display elements as the display elements illustrated in FIGS. 18, 25, and 32 are denoted by the same reference numerals and signs. Explanation of the display elements is omitted.

The receipt screen SC18 is used instead of the receipt screen SC9 illustrated in FIG. 25.

The receipt screen SC18 includes the image IM10, the mark MA1, the message ME4, and a button BU10. That is, the receipt screen SC18 is a screen obtained by adding the button BU10 to the receipt screen SC16. The button BU10 is a GUI element for the user to designate display of a receipt, which is a source of the partial transfer.

The user cannot confirm from the image IM10 concerning which commodity a receipt is transferred to another user. Therefore, if the user desires to perform the confirmation, the user instructs display of an original receipt screen by, for example, touching the button BU10. In the information terminal apparatus 10, according to this instruction, the processor 11 requests the receipt server 20 to transmit an original receipt screen. In response to this request, in the receipt server 20, the processor 21 generates an original receipt screen and transmits the original receipt screen to the information terminal apparatus 10 at the request source. In the information terminal apparatus 10, the processor 11 causes the touch panel 14 to display the transmitted original receipt screen.

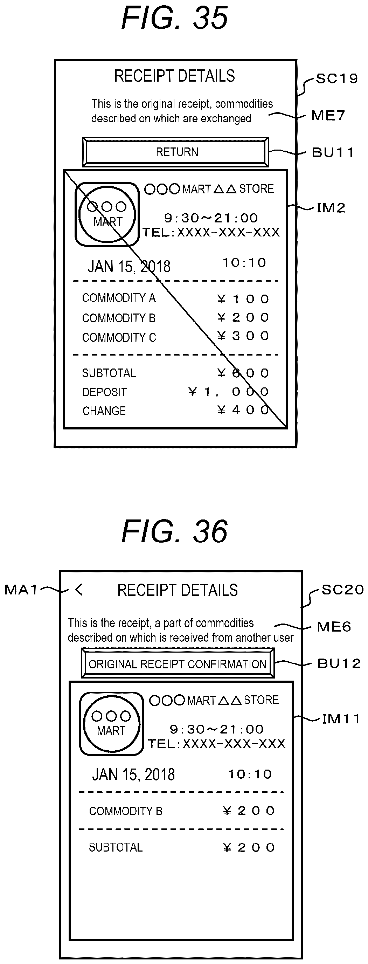

FIG. 35 is a diagram illustrating an example of an original receipt screen SC19. In FIG. 35, the same display elements as the display elements illustrated in FIG. 22 are denoted by the same reference numerals and signs. Explanation of the display elements is omitted.

The original receipt screen SC19 includes the image IM2, a message ME7, and a button BU11. The message ME7 is a character message for informing that the image IM2 is an image of a transfer source receipt. The button BU11 is a GUI element for the user to designate return to a display screen before display of the original receipt screen SC19.

If the user finishes confirming the transfer source receipt with the image IM2, the user instructs to return the screen by, for example, touching the button BU11. In the information terminal apparatus 10, according to this instruction, the processor 11 requests the receipt server 20 to return the screen. In response to the request, in the receipt server 20, the processor 21 transmits the receipt screen SC18 to the information terminal apparatus 10 at the request source. In the information terminal apparatus 10, the processor 11 causes the touch panel 14 to display the transmitted receipt screen SC18.

### Modification 4

FIG. 36 is a diagram illustrating an example of a receipt screen SC20 to be displayed in the information terminal apparatus 10 used by the transfer destination user who receives the partial transfer. In FIG. 36, the same display elements as the display elements illustrated in FIGS. 18, 31, and 33 are denoted by the same reference numerals and signs. Explanation of the display elements is omitted.

The receipt screen SC20 is used instead of the receipt screen SC15 illustrated in FIG. 31.

The receipt screen SC20 includes the image IM11, the mark MA1, the message ME6, and a button BU12. That is, the receipt screen SC20 is a screen obtained by adding the button BU12 to the receipt screen SC17. The button BU12 is a GUI element for the user to designate display of a partial transfer source receipt.

The user cannot confirm from the image IM11 which receipt is transferred to another user. Therefore, if the user desires to perform the confirmation, the user instructs display of an original receipt screen by, for example, touching the button BU12. In the information terminal apparatus 10, according to this instruction, the processor 11 requests the receipt server 20 to transmit the original receipt screen. In response to this request, in the receipt server 20, the processor 21 generates an original receipt screen SC19 and transmits the original receipt screen SC19 to the information terminal apparatus 10 at the request source. In the information terminal apparatus 10, the processor 11 causes the touch panel 14 to display the transmitted original receipt screen SC19.

### Modification 5

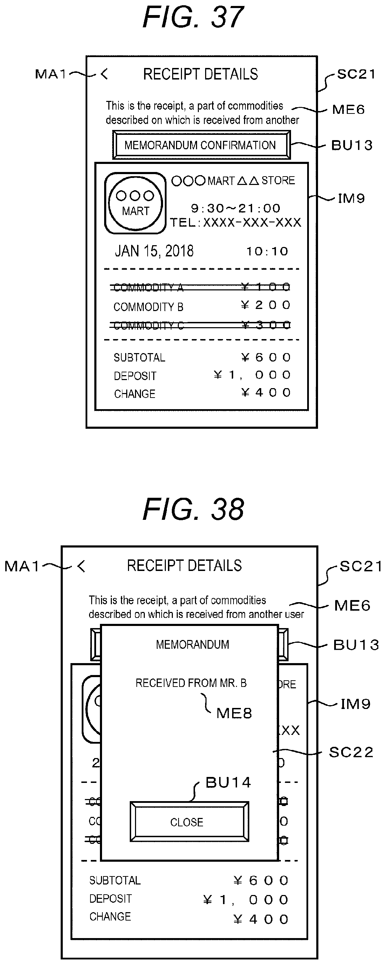

FIG. 37 is a diagram illustrating an example of a receipt screen SC21 to be displayed in the information terminal apparatus 10 used by the transfer source user after performing the partial transfer. In FIG. 37, the same display elements as the display elements illustrated in FIGS. 18 and 31 are denoted by the same reference numerals and signs. Explanation of the display elements is omitted.

The receipt screen SC21 is used instead of the receipt screen SC15 illustrated in FIG. 31.

The receipt screen SC21 includes the image IM9, the mark MA1, the message ME6, and a button BU13. That is, the receipt screen SC21 is a screen obtained by adding the button BU13 to the receipt screen SC15. The button BU13 is a GUI element for the user to designate display of a memorandum.

The user accesses from the information terminal apparatus 10 to the receipt server 20 at any timing and instructs saving of a memorandum concerning transfer of a receipt. If receiving this instruction, in the receipt server 20, the processor 21 adds, to the memorandum table D27, the data records D27R in which a receipt ID designated by the user, a member ID of the user, and text data serving as content of a memorandum designated by the user are respectively shown in the fields F61 to F63.

If the user confirms content of the receipt with the receipt screen SC21 and desires to confirm a memorandum already set concerning the transfer of the receipt shown in the image IM9, the user instructs memorandum display by, for example, touching the button BU13. In the information terminal apparatus 10, according to this instruction, the processor 11 requests the receipt server 20 to transmit a memorandum screen. In response to this request, in the receipt server 20, the processor 21 generates a memorandum screen and transmits the memorandum screen to the information terminal apparatus 10 at the request source. In the information terminal apparatus 10, the processor 11 superimposes and displays the transmitted memorandum screen on the receipt screen SC21.

FIG. 38 is a diagram illustrating an example of a memorandum screen SC22.

The memorandum screen SC22 includes a message ME8 and a button BU14. The message ME8 is a character message represented by text data serving as content of a memorandum. The button BU14 is a GUI element for the user to instruct to end display of the memorandum screen SC22.

If the user finishes confirming the memorandum, the user instructs an end by, for example, touching the button BU14. According to this instruction, the processor 11 ends the display of the memorandum screen SC22 and returns the information terminal apparatus 10 to a state in which the information terminal apparatus 10 displays only the receipt screen SC21.

Similarly, the button BU13 may be added to the receipt screens SC9, SC12, SC16, SC18, and SC20 to display a memorandum screen according to a touch on the button BU13.

A character message represented by text data serving as content of a memorandum may be shown in the various receipt screens explained above.

### Modification 6

Transfer of a receipt may be performed through a permission of a transfer destination.

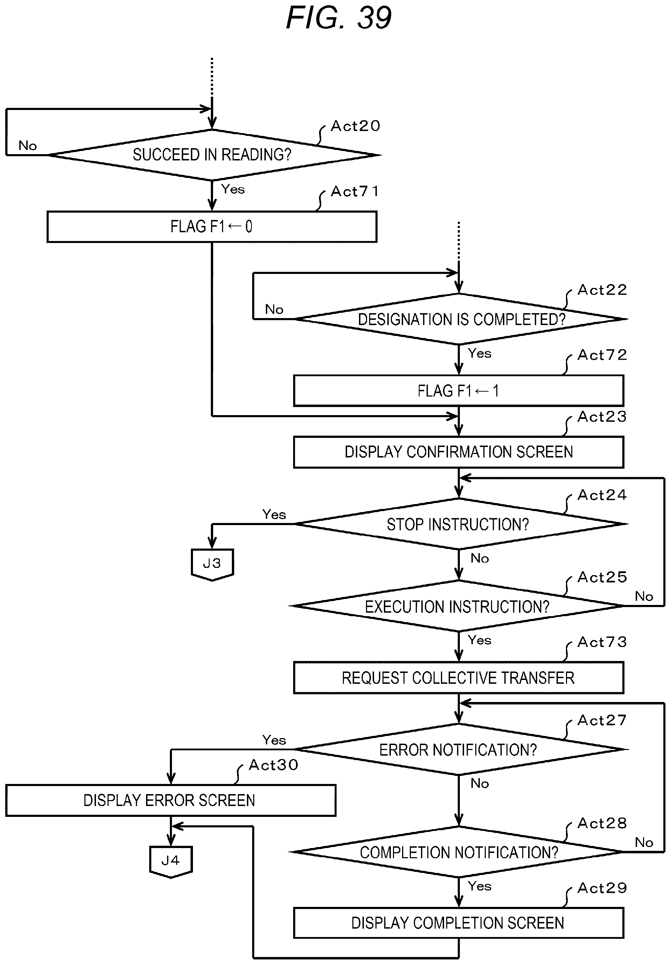

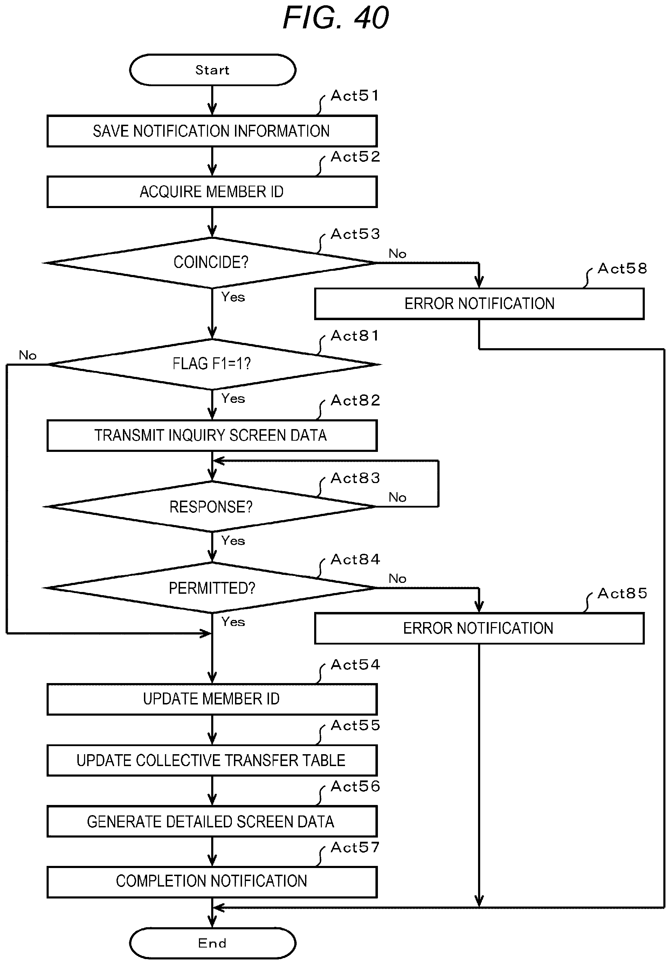

In this case, for example, the information processing illustrated in FIGS. 16 and 21 only has to be respectively changed as illustrated in FIGS. 39 and 40.

FIG. 39 is a flowchart of information processing by the processor 11. A part of processing illustrated in FIG. 16 and performed in common in the information processing illustrated in FIG. 39 is not illustrated. Alternatively, the part of the processing is denoted by the same reference signs as the reference signs in FIG. 16 and detailed explanation of the part of the processing is omitted.

The processor 11 executes the processing up to Act 22 in FIG. 16 in the same manner as explained above. If determining Yes in Act 20 according to success of barcode reading by the barcode reader, the processor 11 proceeds to Act 71.

In Act 71, the processor 11 sets 0 in a flag F1. Thereafter, the processor 11 proceeds to Act 23.

On the other hand, if determining Yes in Act 22 according to declaration of designation completion concerning the transfer destination user, the processor 11 proceeds to Act 72.

In Act 72, the processor 11 sets 1 in the flag F1. Thereafter, the processor 11 proceeds to Act 23.

That is, the flag F1 indicates whether a transfer destination ID is acquired by barcode reading or selection from the acquaintance list.

Thereafter, the processor 11 executes Act 23 in the same manner as in the embodiment and then shifts to the waiting state in Acts 24 and 25 in the same manner as in the embodiment. If determining Yes in Act 25 according to an instruction of execution of the collective transfer, the processor 11 proceeds to Act 73.

In Act 73, the processor 11 requests the receipt server 20 to perform the collective transfer. At this time, the processor 11 notifies the flag F1 to the receipt server 20 in addition to notifying the receipt ID and the transfer destination ID to the receipt server 20 as in the case of Act 26 in FIG. 16. Thereafter, the processor 11 executes Act 27 and subsequent acts as in the case of FIG. 16.

FIG. 40 is a flowchart of information processing by the processor 21. A part of processing illustrated in FIG. 21 and performed in common in the information processing in FIG. 40 is not illustrated. Alternatively, the part of the processing is denoted by the same reference signs as the reference signs in FIG. 21 and detailed explanation of the part of the processing is omitted.

The processor 21 executes Acts 51 to 53 and 58 in the same manner as in the case of FIG. 21. If determining Yes in Act 53 because the acquired member ID coincides with the transfer source ID, the processor 21 proceeds to Act 81.

In Act 81, the processor 21 confirms whether the flag F1 notified in the request for the collective transfer is set to 1. If the flag F1 is set to 1, the processor 21 determines Yes and proceeds to Act 82. That is, if the transfer destination ID is designated by selection from the acquaintance list, the processor 21 proceeds to Act 82.

In Act 82, the processor 21 transmits inquiry screen data to the information terminal apparatus 10 used by the transfer destination user. The inquiry screen data represents an inquiry screen predetermined as a screen for inquiring the transfer destination user whether the collective transfer of a receipt is permitted. The processor 21 may show content of a receipt set as a transfer target on the inquiry screen. The inquiry screen includes a GUI element for the transfer destination user to designate whether the collective transfer is permitted. The processor 21 finds out, from the member master D15, a data record in which a transfer destination ID is shown in a first field and transmits the inquiry screen data to the information terminal apparatus 10 identified by an identification code shown in a second field of the data record.

In the information terminal apparatus 10 that receives the inquiry screen data, the processor 11 causes the touch panel 14 to display the inquiry screen. The transfer destination user confirms the inquiry screen displayed as explained above on the touch panel 14 of the information terminal apparatus 10 used by the transfer destination user and operates a GUI element to designate whether transfer is permitted. According to this operation, the processor 11 transmits response data indicating whether transfer is permitted to the receipt server 20.

In Act 83, the processor 21 waits for the response data to arrive. If the response data is received by the communication interface 24, the processor 21 determines Yes and proceeds to Act 84.

In Act 84, the processor 21 confirms based on the response data whether the transfer destination user permits transfer. If the response data indicates that transfer is permitted, the processor 21 determines Yes and proceeds to Act 54. The processor 21 executes Act 54 and subsequent acts in the same manner as in the case of FIG. 21.

If the response data indicates that transfer is not permitted, the processor 21 determines No in Act 84 and proceeds to Act 85.

In Act 85, the processor 21 performs error notification to the information terminal apparatus 10 that requests the collective transfer. The error notification is notification for notifying that the transfer destination rejects transfer of the receipt responding to the request of this time. Then, the processor 21 ends the information processing illustrated in FIG. 40.

If the flag F1 notified in the request for the collective transfer is set to 0, the processor 21 determines No in Act 81, passes Acts 82 to 84, and proceeds to Act 54. That is, if the transfer destination ID is designated by barcode reading, the processor 21 does not perform the inquiry to the transfer destination user in Acts 82 to 84.

Although not illustrated, concerning information processing related to the partial transfer, permission of the transfer destination user is confirmed in the same manner as explained above. That is, the information processing illustrated in FIGS. 17 and 24 is changed in the same manner as the relation between FIGS. 16 and 21 and FIGS. 39 and 40.

In this way, according to such a modified implementation, the collective transfer and the partial transfer are performed through the permission of the transfer destination user. It is possible to prevent the receipt from being forced to be transferred to the transfer destination user at own discretion of the transfer source user. If the transfer destination ID is designated by barcode reading, the transfer destination user presents the information terminal apparatus 10 used by the transfer destination user to the transfer source user after causing the information terminal apparatus 10 to display a barcode. Therefore, the transfer destination user is considered to permit transfer. Since confirmation work of the transfer destination user in the information terminal apparatus 10 in this case is omitted, it is possible to reduce labor and time of the transfer destination user.

However, even if the transfer destination user presents the information terminal apparatus 10 used by the transfer destination user as explained above, there is no guarantee that the transfer destination user permits transfer of the receipt. Therefore, it may be always confirmed whether the transfer destination user permits transfer irrespective of a designation method of the transfer destination user. That is, Act 81 in FIG. 40 may be omitted. The processor 11 may proceed from Act 53 to Act 82. In this case, the processor 11 may directly perform the information processing in FIG. 17 without performing the information processing in FIG. 39.

According to such a further modified implementation, although labor and time of the transfer destination user increase, the electronic receipt server 20 can always confirm whether the transfer destination user permits transfer. By accumulating and storing a result of the confirmation, it is possible to confirm an intension of the transfer destination user ex post facto.

### Other modifications

A display method for indicating on a receipt screen that a commodity is already transferred is not limited to the addition of the strike out line and may be any method if it is possible to distinguish the commodity from an un-transferred commodity such as a change of a font of characters, a change of a character size, a change of a character color, addition of a mark, or a change of a background color. Even if the strike out line is added, a type of the strike out line may be a broken line or an alternate long and short dash line. Alternatively, a color of the strike out line may be a color different from the character color.

It is also possible to implement the information terminal apparatus 10 as a transaction management apparatus that performs management of a transaction irrespective of the electronic receipt service. An apparatus different from the receipt server 20 and having a function other than management of a transaction may have a function of the transaction management apparatus.

The transaction may be a transaction not involving exchange of an article such as provision of a service. A place of execution of the transaction may be anywhere, for example, the transaction may be performed via a network. The transaction may be for profit or may be free of charge.

The contents of the various kinds of information processing explained above are examples. A change of order of a part of the processing, omission of a part of the processing, addition of another kind of processing, or the like is possible as appropriate.

A part or all of the functions realized by the processors 11 and 21 according to the information processing can also be realized by hardware for executing information processing not based on an information processing program such as a logic circuit. Each of the functions explained above can also be realized by combining software control with the hardware such as the logic circuit.

The several embodiments are explained above. However, the embodiments are presented as examples and are not intended to limit the scope of the invention. These new embodiments can be implemented in other various forms. Various omissions, substitutions, and changes can be made without departing from the scope of the invention. These embodiments and modifications of the embodiments are included in the scope and the gist of the invention and included in the inventions described in claims and the scope of equivalents of the inventions.

## Claims

1. A transaction management apparatus comprising:
a managing section configured to manage transaction data representing content of a transaction in association with an identification code for identifying an individual;
an acquiring section configured to acquire an identification code different from the identification code associated with the transaction data; and
a control section configured to control the managing section to manage the transaction data in association with the identification code acquired by the acquiring section.

2. The transaction management apparatus according to claim 1, further comprising:
a determining section configured to determine a transition item serving as a part of a plurality of transaction items represented by the transaction data; wherein
the transaction data comprise transition items determined by the determining section in association with the identification code acquired by the acquiring section.

3. A transaction management system including a transaction management apparatus and an information terminal apparatus, the transaction management system comprising:
a managing section included in the transaction management apparatus and configured to manage transaction data representing content of a transaction in association with an identification code for identifying an individual;
a determining section included in the information terminal apparatus and configured to determine, according to operation by the individual identified by the identification code associated with the transaction data by the managing section, an identification code different from the identification code to be associated with the transaction data anew;
a notifying section included in the information terminal apparatus and configured to notify the identification code determined by the determining section to the transaction management apparatus;
an acquiring section included in the transaction management apparatus and configured to acquire the identification code notified by the notifying section; and
a control section configured to control the managing section to manage the transaction data in association with the identification code acquired by the acquiring section.

4. A transaction management system including a transaction management apparatus and an information terminal apparatus, the transaction management system comprising:
a managing section included in the transaction management apparatus and configured to manage transaction data representing content of a transaction in association with an identification code for identifying an individual;
a setting section included in the information terminal apparatus and configured to set, according to operation by the individual identified by the identification code associated with the transaction data by the managing section, a transition item serving as a part of a plurality of transaction items represented by the transaction data;
a determining section included in the information terminal apparatus and configured to determine, according to operation by the individual identified by the identification code associated with the transaction data by the managing section, an identification code different from the identification code to be associated anew with the transition item set by the setting section;
a notifying section included in the information terminal apparatus and configured to notify the transition item set by the setting section and the identification code determined by the determining section to the transaction management apparatus;
an acquiring section included in the transaction management apparatus and configured to acquire the transition item and the identification code notified by the notifying section; and
a control section included in the transaction management apparatus and configured to control the managing section to manage the transition item acquired by the acquiring section in association with the identification code acquired by the acquiring section.

5. An information processing method comprising:
managing transaction data representing content of a transaction in association with an identification code for identifying an individual;
acquiring an identification code different from the identification code associated with the transaction data; and
performing control to manage the transaction data in association with the acquired identification code.

6. An information processing program product comprising program code means for performing the steps of, when the program is run on a computer:
managing transaction data representing content of a transaction in association with an identification code for identifying an individual;
acquiring an identification code different from the identification code associated with the transaction data;
determining a transition item serving as a part of a plurality of transaction items represented by the transaction data; and
performing control to manage the determined transition item in association with the acquired identification code.
